# EUROPEAN PATENT SPECIFICATION

(11) **EP 3 688 119 B1**
(45) Date of publication and mention of the grant of the patent: **28.07.2021**
(21) Application number: 18778477.2
(22) Date of filing: 27.09.2018
(51) Int. Cl.: C09K 21/02, G10K 11/162, B60R 13/08, B64C 1/40, E04B 1/78

(54) **FIRE RESISTANT INSULATING COMPOUND**
FEUERBESTÄNDIGER ISOLIERSTOFF
COMPOSÉ ISOLANT RÉSISTANT AU FEU

(30) Priority: 29.09.2017 IT 201700109663
(43) Date of publication of application: 05.08.2020
(73) Proprietor: Romeo, Ronco, 9800 Montecarlo (MC); Fabio, Ermacora, 33098 Valvasone-Arzene PN (IT); Ermacora, Albiz, 33072 Casarsa della Delizia (PN) (IT)
(72) Inventor: FABIO, Ermacora, 33098 Valvasone-Arzene PN (IT); ALBIZ, Ermacora, 33072 Casarsa Della Delizia PN (IT); ALESSANDRO, Fraleoni Morgera, 34136 Trieste (IT)
(74) Representative: Forattini, Amelia
(86) International application number: PCT/EP2018/076211
(87) International publication number: WO 2019/063665

(56) References cited:
- EP-A1- 2 907 796
- KR-A- 20100 033 396
- US-A1- 2013 344 279

## Description

The present invention relates to a fire resistant insulating product.

### Definitions

In the present description and in the claims, the following terms should be understood according to the definitions given hereinafter.

The expression "flame retardant" designates a compound capable of delaying the triggering of combustion of the material to which said compound is added, and of slowing flame propagation. The expression "flame retardant based on an endothermal mechanism" designates metallic or ceramic compounds which have a flame retardant action, as defined above, by breaking down with simultaneous absorption of heat from the surrounding environment. In particular, these materials include oxides, hydroxides, citrates, isocitrates, oxalates, formates, aconitates, acetates, borates with various degrees of oxidation, aluminates with various degrees of oxidation, carbonates, bicarbonates, silicates with various degrees of oxidation, of the metals/semimetals Li, Na, K, Rb, Cs, Be, Mg, Ca, Sr, Ba, Sc, Y, La, Ti, Zr, V, Nb, Mo, Mn, Fe, Ru, Co, Ni, Cu, Zn, Si, B, Al, each of these compounds at any level of hydration. Representative but not exhaustive examples of these materials are Al(OH)₃, Al₂O₃, Al₂SiO₃ and derivatives thereof such as aluminum silicates in general, Mg(OH)₂, MgCO₃, MgO, MgSiO₃ and derivatives thereof such as magnesium silicates in general, CaCO₃, CaO, Ca₂SiO₄ and derivatives thereof such as calcium silicates in general, NaHCO₃, Na₂CO₃, NaO, Na₂SiO₃ and derivatives thereof such as sodium silicates in general, B(OH)₃ and derivatives thereof as such as boron hydroxides or acids in general with various degrees of hydration, Zn₃B₂O₆ and derivatives thereof such as zinc borates in general with various degrees of hydration, TiO₂, Ti(OH)₄, Ti(CO₃)₂.

The term "aerogel" designates an ultralight porous synthetic material derived from a gel in which the liquid phase is replaced by a gaseous phase. An aerogel can be based on various types of material, such as for example aerogels based on silicon, aluminum, chromium, tin, carbon, boron nitride or titanium oxide.

The expression "organic material" designates a material the composition of which is based on carbon.

The term "non-combustible" designates a material capable of exceeding the IMO MSC 307(88) Part 1 international naval standards. In particular, the term "non-combustible" referencing a compound indicates that a sample of the compound prepared as a cylindrical specimen with a diameter comprised between 43 and 45 mm and a height of 50±3 mm, when subjected to a non-combustibility test lasting 30 minutes, by heating in an oven with a temperature that increases progressively from 750°C up to a temperature of 900°C, meets the following requirements:
- difference between maximum internal temperature of the oven and final average temperature of the oven calculated on the last minute of the non-combustibility test (hereinafter identified as "DTF") lower than 30°C;
- difference between maximum surface temperature of the specimen and final average surface temperature of the specimen calculated on the last minute of the non-combustibility test (hereinafter referenced as "DTS") lower than 30°C;
- percentage ratio of weight reduction of the specimen calculated on the basis of the weight of the specimen before and after the non-combustibility test (hereinafter referenced as "D%W") lower than 50%.

### Background art

In the field of insulating products, compounds based on polymeric or organic materials, i.e. carbon-based materials, are known. However, those materials, while allowing to achieve good results as regards thermal or acoustic insulation, are not as effective as regards non-combustibility, because carbon burns easily.

In order to prevent the combustibility of those materials, the prior art teaches the use of so-called "flame retardants". Those compounds work according to various principles:
- forming of physical barriers of fire-resistant layers, such as for example plates or continuous surfaces of steel or ceramic, in order to protect the underlying material from the action of the flame, preventing its propagation;
- intumescence systems, in which appropriate chemical compounds (typically sulfur or phosphorus compounds) added to the material to be protected form, with an endothermal reaction, as a consequence of the initial combustion of the material, a carbon "crust" which is inert with respect to combustion and physically limits the meeting between oxygen and the combustible material located below it, imitating the physical barrier mechanism; in some cases these chemical compounds also have foaming properties;

- systems with an endothermal mechanism, in which appropriate chemical compounds, as a consequence of heating, break down with simultaneous absorption of heat from the surrounding environment, leading to a general lowering of the temperature of the material; this class includes compounds of the metallic/semimetallic type according to the definition given at the beginning of this document. In many cases these compounds also release, as a consequence of breakdown, water molecules, the evaporation of which leads to a further lowering of the temperature of the material to which they are added, and/or carbon dioxide, which being an inert gas prevents further combustion;
- inert gas generation systems, in which appropriate chemical compounds, as a consequence of heating, release large quantities of inert gases, such as nitrogen or carbon dioxide; the compounds used are generally organic molecules containing nitrogen or carbonyl groups, such as melamine molecules or cyanurates. Although in general these reactions are also endothermal, and therefore tend to lower the temperature of the article to which they are added, this class of flame retardants is distinguished from the class of retardants with an endothermal mechanism since in inert gas generation systems the production of inert gases prevails on the capacity to remove heat from the surrounding environment;
- chemical compounds, typically halides, capable of inhibiting the flame by capturing the free radicals that form it.

It should be noted that the various flame retardation strategies listed above are combined together; a typical example of this approach is represented by materials with an endothermal mechanism, which often have both an endothermal degradation effect and an effect of production of inert gas and/or water, such as for example metallic oxides, metallic hydroxides, metallic carbonates according to the exhaustive list given in the "Definitions" section of this document. Also, since many of them are present in nature in hydrated form, during combustion heating also induces their dehydration (loss of water molecules), which further improves their yield as flame retardants.

Flame retardants are usually used as additives for carbon-based insulating materials (typically polymeric materials or organic foams), in particular in fields of application in which the resulting articles are subject to higher combustibility risks. Among these fields it is possible to mention the naval sector, in which there are specific standards regarding the non-combustibility of all materials usable on ships, such as for example the IMO MSC 307(88) Part 1 standard, referenced in the "Definitions" section of the present document. Among the materials most severely affected by these standards there are both thermal and acoustic insulators which, if based on polymeric materials or organic foams, are unable to comply with the above cited standards, even in the presence of large quantities of flame retardants which can mitigate the problem of the combustibility of carbon-based materials.

For this reason, in the field of fire-resistant insulating products to be used in the naval field it is common to resort to mineral-based fibrous materials, such as for example rock wool, glass wool, ceramic wool or similar materials. These materials are installed in the form of panels, typically measuring 100 x 200 cm, and with thicknesses of a few centimeters, according to installation solutions in which the panels are applied to the surfaces to be insulated. These panels, being mainly composed of inorganic materials (albeit with small quantities of organic additives), are not combustible and are therefore capable of exceeding the stringent naval standards on the non-combustibility of materials. Also, in addition to good thermal insulation and firebreak properties, they also have good sound insulation properties. For these reasons they are currently the state of the art in naval insulations.

One possible non-combustible insulating material that is alternative to the mineral wool panels mentioned above is lime, a compound based on calcium hydroxide (Ca(OH)₂) and calcium oxide (CaO) in variable proportions. Lime is a material that is widely used in the building sector and also has antibacterial and anti-mold properties. However, as regards applicability in the naval field, lime has various problems which cause it to be substantially inapplicable as non-combustible insulation in the naval field.

Another class of mineral non-combustible thermally insulating materials is constituted by aerogels, materials that have an extremely high thermal insulation power. An aerogel can be constituted by various materials, the most widely used of which currently is silicon oxide, and is characterized in that it contains a large quantity of air, enclosed in nanometer-sized cavities, reaching extremely low density values (which can reach 0.001 g/cm³). The water molecules trapped inside the nanometer-sized cavities of the aerogel are unable to move enough to transmit heat by conduction, i.e., as a consequence of the collisions of the gaseous molecules with the solid walls of the aerogel itself (Knudsen effect), much less by convection. The result of these characteristics is extremely low values of the thermal conductivity lambda, which can reach values on the order of 0.015 W/mK, i.e., less than half the values of the thermal conductivity lambda of mineral wools (approximately 0.03-0.04 W/mK). Again by virtue of their nanoporosity, aerogels also have good sound insulation properties [F. Cotana et al., Build. Environ. 81 (2014) 92-102]. In the continuation of this document, when not specified, the term "aerogel" shall be understood to reference an aerogel based on silicon oxide.

An insulating product containing aerogel is described for example in EP3124555A1 which discloses a thermal insulation coating composition which includes aerogel, a water-soluble binder and a polymer. Solutions of this type, i.e., in which the aerogel is coupled to organic material, are currently commercially available, but they cannot be used in the naval sector due to the mentioned stringent standards regarding the non-combustibility of the materials that are applicable therein.

The use of lime and aerogel is disclosed in UD2011A000212 which describes a method and a composition of a paste based on lime putty for application on a wall of a building. The paste includes at least lime putty, water, synthetic or natural fibers such as for example cellulose fiber or glass fiber or combinations thereof, organic additives that have the purpose of stabilizing the preparation (for example albumen or linen oil) and limited quantities of aerogel, in which the synthetic or natural fibers are adapted to embed the aerogel within the lime putty. The maximum quantity of aerogel that is embedded in the described and claimed methods is in any case low, on the order of 2% by weight on the total weight of the final mixture. Accordingly, despite achieving considerable results as regards insulating characteristics with respect to the materials of the prior art based on lime alone, with the solution of UD2011A000212 it is not possible to utilize fully the characteristics of the aerogel product, especially due to the difficulty in obtaining a product that is stable over time.

The above problem was solved by the subsequent patent application EP2907796, which describes a composition based on lime and aerogel for application in the building sector, and a method for preparing said composition. The composition is pasty, semiliquid or liquid, and can be applied to a wall by spraying or by providing insulating panels and contains other components in addition to lime and aerogel. These additional components once again include organic additives, resins of the colloid or thickening type, natural or synthetic fibers or mixtures thereof. With this new formulation, the lime-based paste can be filled with aerogel up to percentages by weight of more than 30%, thus gaining considerably a thermal insulation capacity with respect to the formulation described in UD2011A000212. However, the product described in EP2907796 contains a considerable quantity of carbon-based material, contained in the natural or synthetic fibers. Also, it is necessary to consider that the same aerogel used in the formulation of the product described in EP2907796 contains a significant percentage, between 10 and 15% by weight, of organic material [see S. Kiil, Prog. Org. Coat. 89 (2015) 26-34], which is necessary to give the aerogel the hydrophobicity characteristics that prevent the collapse of the aerated nanostructure in the presence of water and enable its insulation characteristics. This percentage of organic material also is obviously subject to combustion, and the sum of the organic materials that are present in the paste described in EP2907796 is sufficient to render said paste non-combustible.

The formulation described in EP 2907796 therefore exceeds the one described in UD2011A000212 with respect to the quantity of aerogel that can be incorporated in the lime-based paste and therefore with respect to the thermal insulation performance. However, both the paste described in UD2011A000212 and the one described in EP2907796 are not suitable, due to their content of organic material, for applications in fields in which non-combustible thermal insulation materials are required, such as for example the naval field.

### Problems of the prior art

As explained above, the materials conventionally used as thermal insulators based on polymeric materials or organic foams are subject to higher risks of combustibility, a characteristic which renders them unsuitable for several fields of application, including also the naval sector.

Mineral fibrous materials, such as rock wool, glass wool, basalt or ceramic wools, although highly effective from the point of view of thermal insulation, sound insulation and acoustic and firebreak properties, as well as non-combustible according to the standards of the naval sector, have a number of problems, some of which are due to the fact that those materials are currently applied in the form of panels:
a) release of loose fibers during the steps of production, finishing, assembly and disassembly of the panels, with consequent risks for the health of the workers involved in the processes;
b) installation of the panels currently occurs by welding so-called claws, i.e. iron spikes, which have the function of piercing and retaining in their seat the panels of rock wool or glass wool or ceramic wool; the claws are fixed to the metal plate on which the panels are to be applied by welding, and this process is performed during the assembly of the ship in the dock, generating considerable risks of fire;
c) the process of welding the claws spoils the corrosion-resistant paint of the surfaces on which the claws are applied, causing hull corrosion trigger points;
d) using the claws reduces the performance in terms of thermal insulation due to the creation of thermal bridges;
e) although rock wool or glass wool or ceramic wool panels have good performance in terms of thermal insulation (thermal conductivity lambda of approximately 0.0320-0.037 W/m), in order to provide acceptable thermal insulation it is necessary to install panels with a thickness of at least 50 mm, with a consequent volume penalty for the structures of the ship, thus taking useful space from the rooms of the ship itself;
f) a typical rock wool panel with a thickness of 60 mm weighs approximately 20 kg/m² and each cruise ship requires approximately 400,000-600,000 m² of paneling; accordingly, the total weight of a ship is penalized considerably by those panels, and this negatively affects also the energy consumption and the maximum cargo weight of the ship;
g) the assembly method that is currently used, which provides for the application of rectangular panels measuring approximately 100 x 200 cm, with thicknesses of a few centimeters, entails the creation of a physical discontinuity between the rock wool or glass wool or ceramic wool panels and the covered metal surface; in naval applications these discontinuities and the method of installation (the above mentioned "claws"), due to temperature variations, humidity and vibrations, over time lead to phenomena of separation of the panels from the surface on which they have been applied, and therefore to a general loss of insulation efficiency and of the firebreak effect and therefore of safety;
h) in positions that are hard to access, such as corners, recesses and reinforcement structures, the application of the panels is extremely difficult and costly in terms of time;
i) the process for the application of rock wool or glass wool or ceramic wool panels is slow and discontinuous, leading to significant costs for naval installation;
l) rock wool or glass wool or ceramic wool panels are sensitive to humidity, and for prolonged periods of exposure to humidity during storage they may suffer from quality deterioration, with size modification and degradation of insulating properties;
m) from the aesthetic standpoint, panels made of rock wool or glass wool or ceramic wool, if not intended for internal regions of the ship, require aesthetically pleasant finishes, which however require further expenditure of time and resources.

Possible solutions to the problem of the excessive weight of the mineral wool panels described above (item f) can consider the use of lighter materials which are still mineral-based; a known example of these materials is aerogel, the extremely low density of aerogel, however, causes a number of problems linked to the forming of dust, which is a consequence of the steps of production and processing of the material: aerogel dust, by having an infinitesimal weight, in fact remains in suspension in the atmosphere for extremely long times. This very fine dust, although not harmful (a claim that is true for aerogels based on silicon oxide and not always valid for other types of aerogel), is inconvenient for workers and inevitably leads to the jamming of any mechanical device with which these fine particles come into contact. Finally, silica aerogel is unable to form a stable contact layer (i.e., of sticking) with metal plates or surfaces, such as for example the walls or decks of ships, or the inside of fire doors. For these reasons, aerogel is never used as is in thermal and/or acoustic insulation applications but is always dispersed in an appropriate binder, i.e., an additional material that has the task of forming a compact matrix within which the aerogel is dispersed. Currently the prior art reveals that these matrices are predominantly of a polymeric type, therefore carbon-based, such as for example in the solution described in patent application EP 3124555 in the name of HYUNDAI MOTOR CO LTD. Polymeric binders give the aerogel-binders assembly good flexibility, allowing its marketing in the form of flexible panels, which are currently used in the building sector. However, the polymeric binder, which is easily combustible, prevents its use in the naval field or anyway in cases in which it is necessary to ensure high characteristics of resistance to fires and non-combustibility, and in any case insulating panels that contain aerogel, even if bonded in a polymeric matrix, have numerous and severe problems of forming very fine dust during the processes required for their installation (cutting, providing holes). Also, these solutions are in any case subject, in the naval field, to installation problems which are similar to those of panels made of mineral fibers, since it is necessary to provide holes or welds on the walls to which the panels are to be applied and then proceed with fixing, taking care to check both the alignment between adjacent panels and the coplanar arrangement of the adjacent panels. Also, once the application of the panels has been completed, it is in any case necessary to plug the gaps between the panels. Insulating panels containing aerogel currently known in the prior art, therefore, are not a valid solution for the problems mentioned above of mineral fiber insulating panels, since they are subject to the same problems described previously with reference to mineral fiber panels and in particular to the previously mentioned items b), c), d), g), h), and i).

These last problems might be solved in principle by using a thermal insulation material that can be deposited by spraying. Most insulating materials that can be deposited with spray methods in the prior art, however, are polymer based, i.e., they are not compatible with naval standards on the non-combustibility of insulating materials and therefore cannot be used in this field or in cases in which it is necessary to ensure high characteristics of fire resistance of the insulating layer. In some cases it is technically possible to deposit, by spray methods, mineral wool in the form of fibers, but the process is complicated and leads to the scattering of large quantities of mineral wool fibers into the environment, a situation that is not desirable due to issues of hygiene and safety in the workplace.

There are, however, insulating materials that can be deposited by spraying, have a non-polymer base and are known in the prior art. For example, lime, which is advantageously non-combustible according to naval standards, if formulated appropriately, i.e., if provided in pastes with appropriate viscosity, can be deposited easily by spraying. In particular, lime can be deposited by spraying if it is formulated so as to obtain a paste with a viscosity between 1000 and 10,000,000 cPs, this breadth of range being due to the fact that the sprayability of the compound is greatly influenced by the spray technology used. For example, with pumps of adequate power it is possible to spray pastes with viscosities on the order of a few million cPs, while less viscous pastes can be sprayed with less powerful pumps. However, it cannot be used advantageously as thermal insulation in the naval field, since it has a limited thermal insulation power, with A values on the order of 0.7-1 W/mK, much higher than those of mineral wool (0.03-0.04 W/mK), which entailed the need to have very thick layers in order to obtain satisfactory thermal insulation, thus adding weight and volume to the thermally insulated structures. Also, lime is inherently very heavy, considering that the Ca(OH)₂ component alone has a density on the order of 2.24 g/cm³, and its use would entail a considerable increase in the weight of a ship that used it as a thermal insulator. Finally, lime does not have good adhesion to metallic materials, which are the typical substrates of the naval industry or of fire doors, since it tends to detach, leaving on the metal a very thin layer of CaO. Due to these limitations, lime cannot be applied as it is as a thermal insulator in the naval field or in other fields, such as fire doors or insulating and firebreak gaps.

The previously cited aerogel also is in principle applicable by spraying. However, this method of application, if performed with aerogel as it is, leads to the forming of very high quantities of very fine particulate matter in the work environment, with the already mentioned negative consequences on the health of workers and on the reliability of the machines that are present therein. Spray deposition of dispersions of aerogel with polymeric binders dispersed or dissolved in water is equally possible, thus limiting the dust deriving from the spraying process; however, the resulting material, i.e., aerogel bonded to polymeric materials, is not suitable for use in the naval field or in other fields for which non-combustibility of the insulation is required, such as the already mentioned fire doors and/or gaps.

A technical solution known in the prior art which combines the use of lime and aerogel in a sprayable paste and is therefore potentially capable of solving most of the problems listed above, is described in the already mentioned patent application UD2011A000212 in the name of some of the same applicants. This sprayable paste includes at least lime putty, organic-based additives, water, synthetic or natural fibers such as cellulose fiber or glass fiber or combinations thereof, and limited quantities of aerogel, at most up to 2% by weight on the total weight of the final mixture. Due to the high content of organic materials that are present in said paste, it is not non-combustible. Moreover, it is scarcely stable over time in terms of storage. This last problem has been solved by the already mentioned subsequent patent application EP 2907796, which in addition to lime and aerogel provides for the use of resins of the colloid or thickener type, natural or synthetic fibers or mixtures thereof. With this new formulation, the lime-based paste can be filled with aerogel up to percentages by weight of more than 30%, thus gaining thermal insulation capacity considerably with respect to the formulation described in UD2011A000212. However, the product described in EP 2907796 still contains a considerable quantity of carbon-based additives, contained in the natural or synthetic fibers. Also, it should be considered that the aerogel itself used in the formulation of the product described in EP 2907796 contains a significant percentage, between 10 and 15% by weight, of organic material [S. Kiil, Progr. Org. Coat. 89 (2015) 26-34], which is necessary to give the aerogel the hydrophobicity characteristics that prevent the collapse of the aerated nanostructure in the presence of water and enable its thermal insulation characteristics, and this percentage of organic material also is subject to combustion. The sum of the organic materials that are present in the paste described in EP 2907796 therefore adds to said paste an important percentage of organic material, which renders said paste not non-combustible.

Both formulations described in EP 2907796 and UD2011A000212 are unsuitable, due to their organic material content, for applications in fields requiring non-combustible thermal insulation materials, such as for example the naval field or the field of fire doors/gaps.

It is certainly possible that the contribution to combustibility provided by the organic materials included in the formulations of the pastes described in UD2011A000212 and EP 2907796 is compensated by the use of flame retardants, which are also known in the prior art. However, flame retardants are generally used in order to render polymeric materials non-combustible or with low flame propagation, and their use generally causes one or more of the following problems:
a') the need for large quantities of retardants in order to obtain the desired effect (10% to 50% by weight of the material), with consequent loss of mechanical properties of the article;
b') difficulty in processing the article with additive, due to the loss of mechanical properties mentioned above;
c') forming of byproducts which are toxic and/or harmful for the environment, especially when using retardants based on sulfur, phosphor, halogenated, nitrogen compounds; d') addition of further weight to the article with additive;
e') medium-high costs if the additive must be added to large quantities of material.

Problem c') can be solved only in two ways, i.e., by resorting to flame retardants based on the barrier effect or based on retardants based on an endothermal mechanisms (oxides, hydroxides, carbonates, aluminates, silicates, etc., according to the definition given in the introduction of this document). However, the first method entails the use of large quantities of metallic or ceramic materials in the form of sheets or films (with a consequent high increase in weight for the articles to which this strategy is applied); also, it is difficult or entirely inapplicable for very small articles or articles with surfaces that are curved or in any case have complex shapes. The second method can instead be performed relatively simply, by adding the metallic or ceramic compounds as powder to the materials that compose the article to be produced. However, the large quantities of flame retardants based on an endothermal mechanism that are required in order to keep polymer-based articles non-combustible (up to over 50% by weight with respect to the material to be protected) lead to severe loss of the mechanical properties of the articles in which these compounds are incorporated, due to the drastic modification of the solid structure of the composite polymer/mineral flame retardant material, and to increased article production costs, as well as to a considerable increase in the final weight of the article.

Surprisingly, the applicants of the present protection device are not aware that flame retardant based on an endothermal mechanism have ever been used in articles constituted by materials based on lime or have ever been used in compounds that can be deposited by spraying.

### Aim of the invention

The aim of the present invention is to provide a thermal and acoustic insulating product based on lime, aerogel, without the use of further additives or organic materials, which therefore has high non-combustibility characteristics, such as to allow its use in the naval field or in any case in cases in which it is necessary to ensure high characteristics of resistance to fires and non-combustibility, and which preferably can be deposited by means of spray deposition methods.

### Summary of the invention

The aim of the invention is achieved by a thermal or acoustic or thermoacoustic insulating compound, characterized in that it comprises the following components:
- at least one aerogel;
- calcite;
- hydrated lime;
- a component constituted by at least one flame retardant based on an endothermal mechanism;
the compound being further characterized in that the compound does not comprise additives with organic compounds that are additional with respect to the organic compounds that are present in said components, the expression "component constituted by at least one flame retardant" meaning that said component comprises one or more flame retardants.

### Advantageous effects of the invention

The solution according to the present invention, by means of the considerable creative input the effect of which constitutes an immediate and not negligible technical progress, has several advantages.

Advantageously, the product according to the present invention has high thermal and acoustic insulation characteristics and at the same time excellent characteristics as regards non-combustibility, making it suitable, for example, for use in the naval field or anyway in cases in which it is necessary to ensure high characteristics of resistance to fires and non-combustibility, so much that it can exceed the non-combustibility tests set by IMO MSC 307(88) Part 1 naval standards.

The product is capable of providing a thermal insulation performance which is equal to or greater than that of current systems based on the use of panels made of mineral fiber, such as for example rock wool or glass wool, for an equal thickness of the material used.

A further advantage is constituted by the possibility to deposit easily the product by spray method, without the need for particular mechanical processes on the application wall, as is instead the case of mineral fiber panels that can be applied to metal walls of ships. Also, the product adheres strongly to the metal walls after deposition of an appropriate primer layer, preferably mineral-based and not harmful for the environment or for the workers who come into contact with it.

The product can contain a minimal quantity of mineral fibers, such as for example rock fiber, glass fiber, basalt fiber or ceramic fiber, which are in any case rendered inert by the other components of the product, which thus render them an integral and non-separable part of the product, by virtue of chemical reactions which fix in a covalent manner the particles of aerogel and the calcium hydroxide and calcium oxide crystals to the mineral fibers, thus eliminating the problems of the presence of free fibers in product processing and deposition regions.

The product does not contain organic solvents or toxic or harmful materials, and its preparation process is sustainable from an environmental standpoint. The process for the preparation of the product also is sustainable from the environmental standpoint, since it does not give rise to harmful emissions.

The product according to the present invention is easy to apply and ready for use, without requiring particular steps of preparation with the mixing of powderlike base products.

The formulation of the product is such that the materials used in order to give non-combustibility, by virtue of the positive chemical interactions between them and the other components of the preparation, instead of decreasing the mechanical performance of the perforation, increase it, provided that one remains within certain intended percentages of use.

The methods of application of the product also are free from noxious emissions to which the operators might be exposed during laying. For example, laying of the product is not subject to the emission of very fine dust or free fibers.

The materials used to give non-combustibility do not generate noxious emissions following their exposure to the action of heat, generating chemical species which are not harmful for the environment or for people.

The product as formulated is capable of ensuring antibacterial or anti-mold functions, thus rendering the environment in which said product is installed healthier for human or animal occupants, while allowing a high degree of thermal insulation and good sound insulation.

The product as formulated is fully recyclable, therefore with a reduced environmental impact for production and use with respect to the materials currently used, since any processing waste or residues can be immediately and straightforwardly recycled in a subsequent step of preparation of further product. This advantageously also avoids the transfer of large quantities of waste to be sent to a landfill and/or to further treatments at the end of the life of the product, avoiding consequent additional costs which can also be considerable and can affect the cost of the final product, while mineral fiber panels (such as for example rock wool) currently being used are considered special waste and require particular and expensive disposal procedures.

### Description of the drawings

An embodiment is described hereinafter with reference to the accompanying drawings, to be considered as a nonlimiting example of the present invention and wherein:
Figure 1 is a schematic view of the system used to perform the non-combustibility tests of the samples of material;
Figure 2 is chart which shows the results of non-combustibility tests on control samples provided with a formulation based on aerogel and lime;
Figures 3, 4, 5 and 6 are each a chart which shows the results of non-combustibility tests performed on some formulations of the inventive product;
Figures 7 and 8 are each a chart which shows the result of non-combustibility tests performed on further formulations of the inventive product with a larger number of components with respect to the formulations of the preceding figures;
Figure 9 is a chart which shows the results of non-combustibility tests performed on samples of the inventive product also including mineral wool;
Figures 10 and 11 are microscope images of samples of fire-resistant paste provided according to two different formulations of the present invention.

### Description of the invention

The present invention relates to a thermal and acoustic insulation material based on lime, aerogel, and flame retardants based on an endothermal mechanism, without the use of further additives or organic materials and therefore provided with high characteristics of non-combustibility such as to allow its use in the naval field or anyway in cases in which it is necessary to ensure high characteristics of resistance to fires and non-combustibility. The product, hereinafter referenced also as "fire-resistant paste" or "fire-resistant compound" or "fire-resistant material", can be advantageously deposited by spraying at least in some of its formulations.

As explained previously, insulating materials in the form of wet paste with aerogel content are known which are capable of allowing to obtain particularly low values of the lambda coefficient that expresses thermal conductivity. However, these insulating materials in the form of wet paste with aerogel content are unsuitable for the applications for which stringent requirements of resistance to fires and non-combustibility are needed due to the presence, in these materials, of polymeric binding bases which are necessary in order to give the aerogel-binder set good flexibility and allow to obtain products that can be applied without dust release. For example, particular applications for which stringent requirements of resistance to fire and non-combustibility are needed which are within the field of application of the fire-resistant insulating material containing aerogel in the form of wet paste provided according to the invention are:
- the naval field for providing insulation on metallic and nonmetallic walls;
- insulation in the form of filler of gaps between walls;
- fire doors for the naval field;
- fire doors for the construction sector in private buildings, such as for example doors for dividing rooms in which combustible materials may be present;
- fire doors for the construction sector in public buildings or buildings open to the public, such as for example schools, hospitals, commercial venues, cinemas, theaters, conference rooms, healthcare facilities, hotels.

With reference to the known products containing aerogel, it is pointed out that a simple replacement of the organic binders usually used with inorganic binders, such as glass wool, rock wool or similar materials, would not lead to the desired result of a fire-resistant insulating material containing aerogel in the form of paste. In fact, in most cases these inorganic binders contain small quantities of organic material, such as for example phenol-formaldehyde resins, which are added to the fibers in order to render them more flexible and processable. This percentage of organic materials, added to the albeit small quantity of organic material that is present in the aerogel, prevents the use of the resulting material for the naval sector or anyway in cases in which it is necessary to ensure high characteristics or resistance to fires and non-combustibility (such as for example fire doors, firebreak or fire-resistant walls, floors and/or gaps, etc.), unless one also reduces the quantity of aerogel, which however would compromise the effectiveness of the thermal insulation action of the resulting material. Even when these inorganic binders do not contain the above-mentioned small quantities of organic materials, the organic material alone that is present in the aerogel (when the latter is present in the compound in quantities sufficient to ensure a good insulation effect, for example for percentages by weight of more than 15%), is sufficient to cause combustibility according to the IMO MSC 307(88) Part 1 standards, as will become apparent in the description of the results related to the control formulation presented hereinafter.

In other words, if one wishes to obtain a material containing aerogel with fire resistance and non-combustibility properties, according to the current prior art it would be necessary to sacrifice the effectiveness of the thermal insulation action of the material itself. This problem, in principle, might be solved by using appropriate flame retardants, but presumably due to the technical prejudice related to the fact that a ceramic or metallic material (such as for example silicon aerogel or lime) does not per se need the presence of any flame retardant in order to be non-combustible, and that when used in polymer-based articles flame retardants cause structural stability problems and loss of mechanical properties of the articles to which they are added, in the prior art there is no technical solution of this kind. The problem of providing an insulating material containing aerogel which is non-combustible and can be deposited by spraying therefore remains unsolved.

Surprisingly, the proponents have found that in a mixture of lime and silicon aerogel the presence of flame retardants based on an endothermal mechanism, added to the mixture individually or in combination with each other, allows to obtain, during combustion, an effect of lowering the temperatures of the material that has received the additives, so as to meet the most stringent standards regarding non-combustibility, such as for example the IMO MSC 307(88) Part 1 naval standards. This effect is tangible even at concentrations of flame retardants based on an endothermal mechanism that are much lower than the ones used in the prior art in polymer-based articles, without causing any problem of loss of mechanical properties of the material that has received the additives.

The invention described herein therefore solves the hitherto unsolved problem of providing an insulating material containing aerogel which is non-combustible and (according to some advantageous implementations of the invention) can be deposited by spraying, by resorting to the use of small quantities of flame retardants based on an endothermal mechanism (maximum 15% by weight on the weight of the final compound). In turn, this solution allows to overcome the problems of the prior art described previously in letters a) to I) and allow us to achieve the advantages described previously with reference to the section "Advantageous effects of the invention".

Also, the layer of thermally insulating paste deposited by spraying on a metallic wall has a pleasant aesthetic appearance, similar to that of a plastered building wall, thus solving also the problem m) described previously.

The invention proposed herein therefore consists of an insulating material in paste form based on lime and aerogel, including at least one flame retardant based on an endothermal mechanism, preferably in a form that can be deposited by spraying, with:
- elimination of all the carbon-based components that are not strictly necessary, such as for example organic additives;
- possible, but not necessary, presence of reduced quantities (maximum 15% by weight on the total weight of the final compound) of mineral fibers (glass wool, rock wool, basalt wall, ceramic wool, or the like), which are in any case rendered inert natively by the presence of the lime and of the flame retardants based on an endothermal mechanism;
- content of reduced quantities of flame retardants based on an endothermal mechanism (metallic or ceramic compounds) in order to appropriately neutralize the effect of contribution to combustion performed by the organic fraction that is present in the aerogel.

The use of small quantities of flame retardants width endothermal mechanism (maximum 15% by weight on the total weight of the composition) provides several advantages:
- it does not increase the carbon content of the paste, thus rendering it suitable for naval use;
- economic advantages, since this type of retardant has a low cost and their low quantity in the formulation allows to contain the additional costs linked to the introduction of additives in the insulating paste;
- it contributes to suppress the flame and to render the resulting paste safer in environments in which fire is a problem (ships, but also electrical systems, fuel or oil deposits, etc.) by virtue of the properties of endothermal degradation and of water generation;
- the chemical and physical nature of these flame retardants based on an endothermal mechanism and the small quantity thereof introduced in the final compound allows that compound to keep intact, and in some cases improve, its mechanical properties, maintaining a good compromise between the structural solidity of the paste and its elasticity. In particular, with the presented formulations, one obtains an effect of chemical bonding between flame retardants based on an endothermal mechanism and components of the paste, essentially calcium hydroxide and oxide, silicon oxide. With the obtainment of these chemical bonds one has a greater structural strength of the paste, for example with reference to flaking and abrasion resistance, and uniformity of dispersion of the retardants in the paste is obtained, thus avoiding phase separations which lead to lack of uniformity, with consequent deterioration of the mechanical and flame resistance properties;
- the retardants based on an endothermal mechanism mixed with the paste based on calcium and silicon aerogel are ecologically compatible with the environment and do not entail health problems for workers and users, since they do not lead to the forming of noxious compounds;
- the material obtained according to the present invention allows deposition according to spray deposition methods on walls, even on metal walls.

The fire-resistant insulating material containing aerogel in the form of wet paste according to the present invention has several innovative aspects, including:
- the possibility to be used for thermal insulation in the naval field as a material that can be deposited by spraying, a method so far not practicable with the current background consisting of panels made of mineral fiber which are applied to the walls one by one; the possibility to spray the thermal insulation material therefore allows to speed up greatly the process of thermal insulation even for very large surfaces and/or for irregular surfaces, improving the productivity and economy of the thermal insulation process;
- the possibility to be used for thermal insulation or for the provision of firebreak material in doors and/or walls and/or gaps in many fields of technology (naval, civil building, plants, military applications) by spraying, a method until now not practicable with the current prior art consisting of thermally insulating panels/layers made of mineral fiber applied to the surfaces one by one, with the advantages related to the spray method (productivity, economy) listed above.

In order to obtain the desired properties of the fire-resistant insulating material containing aerogel in the form of wet paste according to the present invention, various formulations have been identified which will be described hereinafter in greater detail.

Although in the tests reported hereinafter reference is made explicitly to a limited number of flame retardants based on an endothermal mechanism, such as for example Mg(OH)₂, Al(OH)₃ and the carbonates CaCO₃, MgCO₃, NaHCO₃ or mixtures thereof, the person skilled in the art will understand that the flame retardants based on an endothermal mechanism described above are only some of the possible flame retardants based on an endothermal mechanism that can be used for the purposes of the present invention, and that other flame retardants based on an endothermal mechanism, which are possible and known in the art, although not included in the list described above, fall within the protective scope of the present patent (see in this regard "Non-Halogenated Flame Retardant Handbook", Eds. Alexander B. Morgan and Charles A. Wilkie, Scrivener Publishing/Wiley, 2014, chapter 3).

In particular, these compounds that can be classified as flame retardants based on an endothermal mechanism according to the definition given in the "Definitions" section of this document, include oxides, hydroxides, citrates, isocitrates, oxalates, formates, aconitates, acetates, borates (with various degrees of oxidation such as for example B(OH)₃ and derivatives thereof), aluminates (with various degrees of oxidation, such as for example Al(OH)₃, Al₂O₃), carbonates, bicarbonates, silicates (with various degrees of oxidation), of the metals/semimetals Li, Na, K, Rb, Cs, Be, Mg, Ca, Sr, Ba, Sc, Y, La, Ti, Zr, V, Nb, Mo, Mn, Fe, Ru, Co, Ni, Cu, Zn, Si, B, Al (such as for example MgSiO₃, Al₂SiO₃, Ca₂SiO₄, Na₂SiO₃), each of these compounds at any level of hydration. The flame retardants based on an endothermal mechanism reported as examples in the tests, i.e., Mg(OH)₂, Al(OH)₃ and the carbonates CaCO₃, MgCO₃, NaHCO₃, mainly utilize the endothermal mechanism. In other words, they break down starting from a certain temperature, absorbing heat from the environment. Also, the carbonates produce inert gas CO₂ which dilutes any combustible gases that originate from the host material. The hydroxides, instead, by dissociating release water in the liquid state, which evaporates, absorbing heat from the environment (latent heat of evaporation). Each flame retardant based on an endothermal mechanism has its own degradation window, in which it absorbs heat and, if allowed by the chemical structure, generates molecules of water or carbon dioxide or of another kind. For example, magnesium carbonate MgCO₃ breaks down between approximately 400 and 700°C, according to the reaction: MgCO₃ --> MgO+CO₂. Sodium bicarbonate NaHCO₃ instead breaks down at low temperatures and in a narrow window, between 100 and 200°C, according to the reaction: NaHCO₃ --> Na₂CO₃+H₂O+CO₂. Magnesium hydroxide Mg(OH)₂, on the contrary, has a wide breakdown window, which ranges from approximately 300°C up to over 700°C according to the reaction: Mg(OH)₂ → MgO+2H₂O. Aluminum hydroxide or aluminum trihydrate Al(OH)₃ has an even broader breakdown window, with degradation start at approximately 200°C and degradation end at approximately 600-700°C, according to the reaction: 2Al(OH)₃ --> Al₂O₃+3H₂O. Finally, calcium carbonate CaCO₃ breaks down in a narrower temperature range, which however is on average higher, with degradation start at approximately 550°C and end at approximately 830°C, according to the reaction: CaCO₃ --> CaO+CO₂.

By using appropriately these different breakdown ranges in relation to the desired fire stability range and by mixing accordingly the materials mentioned above (as well as other types of retardants based on an endothermal mechanism which are not exemplified herein but are in any case mentioned), it is thus possible to provide an appropriate window of fire resistance in which each one of these compounds performs its action of lowering the temperature and/or producing inert gas. Also, the reaction of breakdown of calcium carbonate (known as calcination) not only has high enthalpy (around 423 cal/g), i.e., lowers significantly the ambient temperature, but also leads to an actual regeneration of the insulating paste described herein, since it is based on CaO and Ca(OH)₂, creating a "self-repair" effect of the layer at the typical temperatures of a fire, indeed above 500°C. This characteristic is a further advantage of the formulation described herein, which for this reason also is highly resistant with respect to fire.

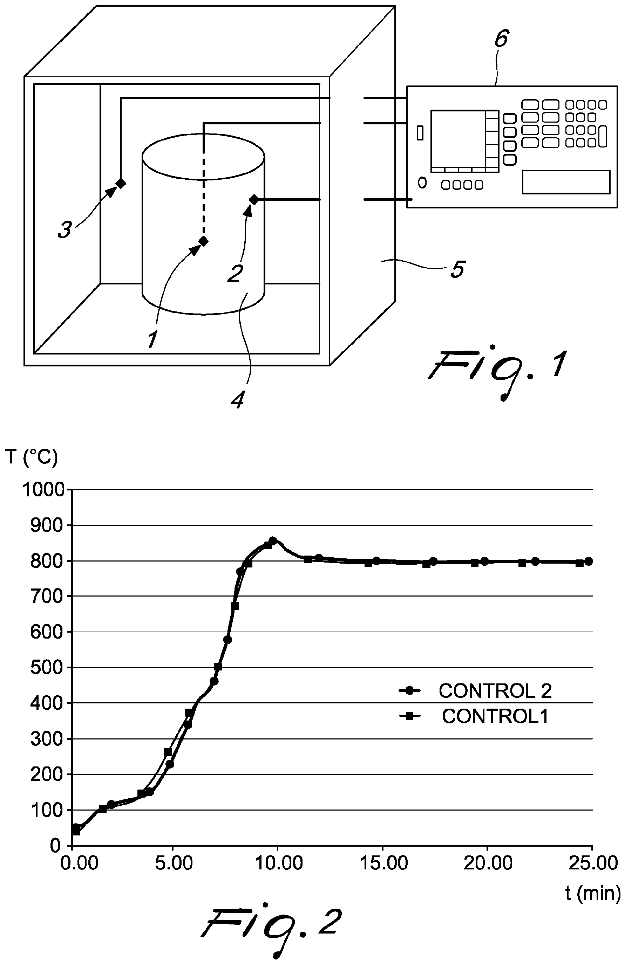

The results of non-combustibility tests performed according to the IMO MSC 307(88) Part 1 naval standards on a number of specimens, obtained by using different formulations of the fire-resistant insulating material containing aerogel in the form of wet paste that preferably can be deposited by spraying according to the present invention, are reported hereafter. In all of these tests, when reference is made to the total weight of the formulation being considered, it is understood to be wet weight, including the water that is present in the lime-based compound incorporated in the formulation. These tests, with reference to Figure 1, are described briefly hereinafter, and reference is made to the mentioned IMO MSC 307(88) Part 1 technical standards for greater detail regarding their preparation and execution. A specimen (4) having a cylindrical shape (diameter of 43-45 mm and height of 50±3 mm) of the material to be tested is placed in an electric oven (5) with a programmable temperature rise rate. The specimen (4) is connected to a first temperature detector (1), typically a first thermocouple, which measure the internal temperature of the specimen (4), providing a temperature known as "TC", and to a second temperature detector (2), typically a second thermocouple, which measures the surface temperature of the specimen, providing a temperature termed "TS". A third temperature detector (3), typically a third thermocouple, measures the internal temperature of the oven (5), providing a temperature termed "TF". The detectors (1, 2, 3) are connected to a measurement instrument (6). The oven (5) is heated to a temperature of 900°C. During heating, a check is made as to whether the detectors (1, 2, 3) provide the same temperature with a maximum margin of deviation between each detector and the other two of 30°C. If the detected deviation is lower than 30°, then this means that combustion reactions have not occurred on the surface of the specimen (4) or inside the specimen (4) and the material is therefore deemed non-combustible. Otherwise, the material is deemed combustible. Also, the weight of the specimen (4) is measured before the test and at the end of the test, and the weight loss of the specimen (4) following heating (5) in the oven must not exceed 50%.

In some of the following tables which illustrate the results of the tests performed, the following parameters are reported to evaluate the characteristics of the inventive material:
- DTF, defined as the difference between the maximum temperature detected by the third temperature detector (3) which measures TF and the final average temperature value detected by the third detector (3) calculated on the last minute of the test, in which the temperatures are expressed in °C;
- DTS, defined as the difference between the maximum temperature detected by the second temperature detector (2) which measures TS and the final average temperature value detected by the second detector (2) calculated on the last minute of the test, in which the temperatures are expressed in °C;
- D%W, defined as the percentage ratio of weight reduction of the specimen (4) calculated on the basis of the weight of the specimen (4) before and after the non-combustibility test.

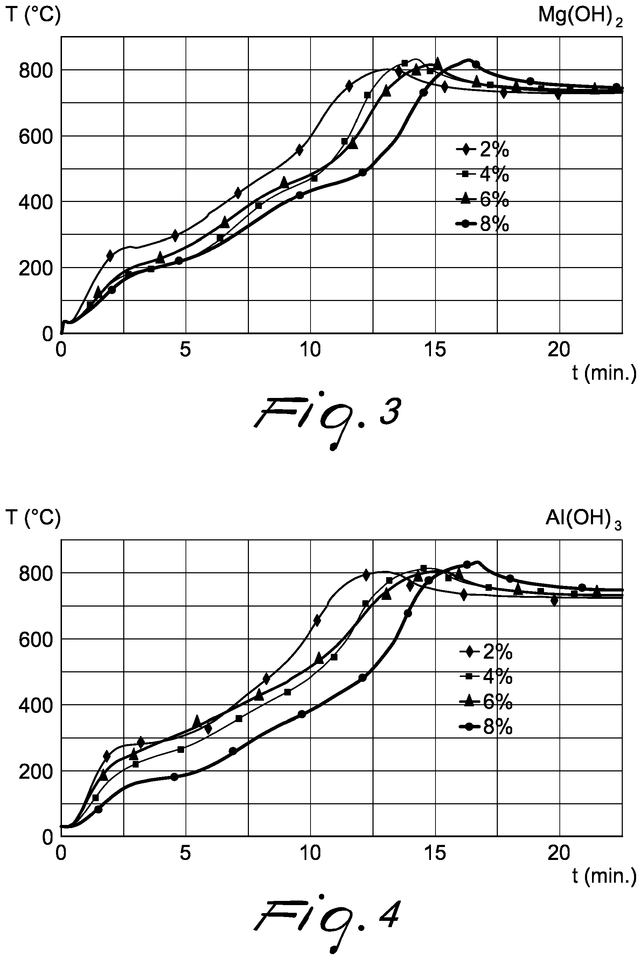

Again with reference to Figure 1, Figures 2 to 7 show the temperature values TC detected by means of the first temperature detector (1) which measures the internal temperature of the specimen (4), in which the time 0 is assumed as the moment of ignition of the oven or of insertion of the specimen in the oven, for a control formulation of the fire-resistant paste according to the present invention, in which flame retardants have not been introduced (Figure 2), and for different innovative formulations of the fire-resistant paste according to the present invention (Figures 3-7).

Hereinafter, a description is given of compositions and characteristics of the various formulations provided so as to demonstrate the effectiveness of the invention, in which the expression "Hydrated lime" preferably refers to hydrated lime of the 40:60 dry:water type. It will be evident to the person skilled in the art that it is possible, however, also to use hydrated lime with a different dry:water ratio, optionally correcting the composition with subsequent additions of greater or smaller quantities of water.

### FORMULATION I ("Control").

A first formulation for checking the effectiveness of the present invention was prepared, including compounds based on lime, aerogel and water (in order to prepare a pasty formulation), without the presence of flame retardants based on an endothermal mechanism and without fibers of any kind (neither organic nor mineral), so as to have a reference point on the basis of which to evaluate the effect of these last two components. This formulation is termed "Control" and is given in Table 1.

**Table 1: formulation I of the control sample**

| Compound | Control composition | |
|---|---|---|
| | Weight (g) | % by weight |
| Aerogel | 20 | 17.4 |
| Calcite | 5 | 4.3 |
| Hydrated lime | 90 | 78.3 |
| Total | 115 | 100 |

Two specimens (4) having an identical composition, termed control 1, designated by C1 and control 2, designated by C2, were produced with this formulation, with reference to Figure 1. The behavior of the temperature TC of the two specimens (4) following the non-combustibility test described previously, is given in Figure 2, in which it is possible to verify that the maximum temperature of the specimens is reached approximately 10 minutes after the beginning of the test.

Further results of the non-combustibility tests performed according to the method described previously are given in the following Table 2.

**Table 2 - Results of the non-combustibility tests performed on the control samples.**

| Sample | DTF (°C) | DTS (°C) | D%W |
|---|---|---|---|
| Control 1 (C1) | 46.7 | 41.7 | 18.0 |
| Control 2 (C2) | 36.1 | 47.8 | 17.4 |

As can be seen from Table 2, neither of the two control samples formulated according to the description of Table 1, therefore without the presence of flame retardants based on an endothermic mechanism, is capable of passing the non-combustibility test prescribed by the IMO MSC 307(88) Part 1 standards, which provide for a threshold of 30°C for DTF and DTS and a threshold of 50% for D%W.

### FORMULATION II - Mg(OH)₂

Some formulations of the present invention including water, compounds based on lime, aerogel and the flame retardant based on an endothermal mechanism Mg(OH)₂ in different percentages are given in the following Table 3.

**Table 3: first formulation**

| Compound | Percentage of added Mg(OH)₂ | | | | | | | |
|---|---|---|---|---|---|---|---|---|
| | 2% | | 4% | | 6% | | 8% | |
| | Weight (g) | % | Weight (g) | % | Weight (g) | % | Weight (g) | % |
| Aerogel | 40 | 17.04 | 40 | 16.69 | 40 | 16.35 | 40 | 16 |
| Calcite | 10 | 4.27 | 10 | 4.17 | 10 | 4.09 | 10 | 4 |
| Hydrated lime | 180 | 76.69 | 180 | 75.13 | 180 | 73.55 | 180 | 72 |
| Mg(OH)₂ | 4.7 | 2 | 9.6 | 4.01 | 14.7 | 6.01 | 20 | 8 |
| Totals | 234.7 | 100 | 239.6 | 100 | 244.7 | 100 | 250 | 100 |

The trend of the temperature TC of the specimens (4) following the non-combustibility test performed according to the method described above is given in Figure 3, the legend of which indicates the percentages of Mg(OH)₂ introduced in the tested formulations, which correspond to the ones described in Table 3. As can be seen by comparing Figure 3 with Figure 2, the introduction of the flame retardant based on an endothermal mechanism in the formulation significantly delays the rise of the temperature in the specimen (4). For the specimen (4) provided with the formulation without flame retardant (samples Control 1, designated by C1, and Control 2, designated by C2, Figure 2), the maximum temperature provided by the test, approximately 800°C, is in fact reached after just 10 minutes, whereas with the addition of the flame retardant Mg(OH)₂ this temperature is reached after approximately 13, 13.5, 15 and 17 minutes for percentages of Mg(OH)₂ of 2%, 4%, 6% and 8% respectively. This demonstrates the effectiveness of the addition of Mg(OH)₂ in the fire-resistant paste for the fire resistance of the innovative formulation proposed herein.

Further results of the non-combustibility tests performed according to the method described previously are given in the following Table 4, in which the names of the samples correspond to the ones of Table 3.

**Table 4 - Results of the non-combustibility tests performed on the samples containing Mg(OH)₂**

| Percentage of added Mg(OH)₂ | DTF (°C) | DTS (°C) | D%W (°C) |
|---|---|---|---|
| 2% | 32 | 29 | 17.4 |
| 4% | 23 | 25 | 17.6 |
| 6% | 22 | 25 | 18.2 |
| 8% | 19 | 18 | 18.5 |

As can be seen from Table 4, for all the samples with percentages of Mg(OH)₂ higher than 2% all the values of the temperature rises DTF and DTS, as well as of the weight decrease D%W, fall within the corresponding acceptability thresholds prescribed by the IMO MSC 307(88) Part 1 standards. The addition of the flame retardant based on an endothermal mechanism Mg(OH)₂ is therefore effective also with respect to the passing of the above described tests dictated by the IMO MSC 307(88) Part 1 standards.

### FORMULATION III - Al(OH)₃

Some formulations of the present invention including water, compounds based on lime, aerogel and the flame retardant Al(OH)₃ in various percentages are given in the following Table 5.

**Table 5 - Composition of the samples containing Al(OH)₃.**

| Compound | Percentage of added Al(OH)₃ | | | | | | | |
|---|---|---|---|---|---|---|---|---|
| | 2% | | 4% | | 6% | | 8% | |
| | Weight (g) | % | Weight (g) | % | Weight (g) | % | Weight (g) | % |
| Aerogel | 40 | 17.04 | 40 | 16.69 | 40 | 16.35 | 40 | 16 |
| Calcite | 10 | 4.27 | 10 | 4.17 | 10 | 4.09 | 10 | 4 |
| Hydrated lime | 180 | 76.69 | 180 | 75.13 | 180 | 73.55 | 180 | 72 |
| Al(OH)₃ | 4.7 | 2 | 9.6 | 4.01 | 14.7 | 6.01 | 20 | 8 |
| Totals | 234.7 | 100 | 239.6 | 100 | 244.7 | 100 | 250 | 100 |

The behavior of the temperature TC of the specimens (4) following the non-combustibility test performed according to the method described above is given in Figure 4, the legend of which indicates the percentages of Al(OH)₃ introduced in the tested formulations, which correspond to the ones described in Table 5. In this case also, as in the preceding one in which the added flame retardant was MG(OH)₂, it can be seen that the introduction of the flame retardant based on an endothermal mechanism in the formulation significantly delays the rise of the temperature in the specimen (4) with respect to "control" Formulation I. In fact, for the specimen (4) provided with the formulation without flame retardant (samples "Control 1" and "Control 2", Figure 2), the maximum temperature provided by the test, approximately 800°C, is reached after just 10 minutes, whereas with the addition of the flame retardant Al(OH)₃ this temperature is reached after approximately 13, 15, 15.5 and 17 minutes for the samples with Al(OH)₃ at 2, 4, 6 and 8% respectively. This demonstrates the effectiveness of the addition of Al(OH)₃ in the fire-resistant paste for the fire resistance of the innovative formulation proposed herein.

Further results of the non-combustibility tests performed according to the method described previously are given in the following Table 6, in which the names of the samples correspond to those of Table 5.

**Table 6 - Results of the non-combustibility tests performed on the samples containing Al(OH)₃**

| Percentage of added Al(OH)₃ | DTF (°C) | DTS (°C) | D%W (°C) |
|---|---|---|---|
| 2% | 16 | 38 | 16.1 |
| 4% | 8 | 24 | 27.6 |
| 6% | 15 | 26 | 24.9 |
| 8% | 10 | 18 | 23.9 |

As can be seen from Table 6, for all the samples with percentages of Al(OH)₃ greater than 2% all the values of the temperature rises DTF and DTS, as well as the weight decrease D%W, fall within the corresponding acceptability thresholds prescribed by the IMO MSC 307(88) Part 1 standards. The addition of the flame retardant based on an endothermal mechanism Al(OH)₃ is therefore effective also with respect to the passing of the tests described above dictated by the IMO MSC 307(88) Part 1 standards.

### FORMULATION IV - CaCO₃

Some formulations of the present invention including water, compounds based on lime, aerogel and the flame retardant CaCO₃ in different percentages are given in the following Table 7.

**Table 7 - Composition of the samples containing CaCO₃.**

| Compound | Percentage of added CaCO₃ | | | | | | | |
|---|---|---|---|---|---|---|---|---|
| | 2% | | 4% | | 6% | | 8% | |
| | Weight (g) | % | Weight (g) | % | Weight (g) | % | Weight (g) | % |
| Aerogel | 40 | 17.04 | 40 | 16.69 | 40 | 16.35 | 40 | 16 |
| Calcite | 10 | 4.27 | 10 | 4.17 | 10 | 4.09 | 10 | 4 |
| Hydrated lime | 180 | 76.69 | 180 | 75.13 | 180 | 73.55 | 180 | 72 |
| CaCO₃ | 4.7 | 2 | 9.6 | 4.01 | 14.7 | 6.01 | 20 | 8 |
| Totals | 234.7 | 100 | 239.6 | 100 | 244.7 | 100 | 250 | 100 |

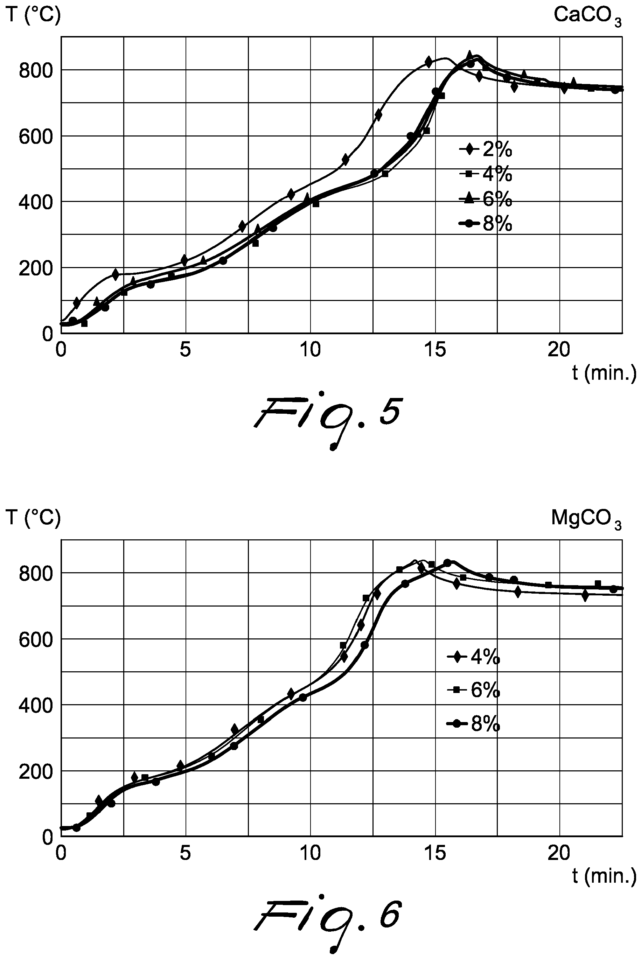

The behavior of the temperature TC of the specimens (4) following the non-combustibility test performed according to the method described above is given in Figure 5, the legend of which indicates the percentages of CaCO₃ introduced in the tested formulations, which correspond to the ones described in Table 5. In this case also, as in the preceding ones exemplified by formulations II and III, it can be seen that the introduction of the flame retardant based on an endothermal mechanism in the formulation significantly delays the rise of the temperature in the specimen (4) with respect to the "control" Formulation 1, allowing to reach the maximum temperature of the test only after approximately 16, 17, 17 and 17 minutes for the samples with 2, 4, 6 and 8% CaCO₃ respectively, to be compared with the approximately 10 minutes of the control formulation. This demonstrates the effectiveness of the addition of CaCO₃ in the fire-resistant paste for the fire resistance of the innovative formulation proposed herein.

Further results of the non-combustibility tests performed according to the method described above are given in the following Table 8, in which the names of the samples correspond to those of Table 7.

**Table 8 - Results of the non-combustibility tests performed on the samples containing CaCO₃**

| Percentage of added CaCO₃ | DTF (°C) | DTS (°C) | D%W (°C) |
|---|---|---|---|
| 2% | 20 | 33 | 15.1 |
| 4% | 14 | 24 | 11.2 |
| 6% | 17 | 21 | 12.6 |
| 8% | 17 | 28 | 21 |

As can be seen from Table 8, for all the samples with percentages of CaCO₃ greater than 2% all the values of the temperature rises DTF and DTS, and of the weight decrease D%W, fall within the corresponding acceptability thresholds prescribed by the IMO MSC 307(88) Part 1 standards. The addition of the flame retardant based on an endothermal mechanism CaCO₃ is therefore effective also with respect to the passing of the tests described above dictated by the IMO MSC 307(88) Part 1 standards.

### FORMULATION V - MgCO₃

Some formulations of the present invention including water, compounds based on lime, aerogel and the flame retardant MgCO₃ in different percentages are given in the following Table 9.

**Table 9 - Composition of the samples containing MgCO₃.**

| Compound | Percentage of added MgCO₃ | | | | | | | |
|---|---|---|---|---|---|---|---|---|
| | 2% | | 4% | | 6% | | 8% | |
| | Weight (g) | % | Weight (g) | % | Weight (g) | % | Weight (g) | % |
| Aerogel | 40 | 17.04 | 40 | 16.69 | 40 | 16.35 | 40 | 16 |
| Calcite | 10 | 4.27 | 10 | 4.17 | 10 | 4.09 | 10 | 4 |
| Hydrated lime | 180 | 76.69 | 180 | 75.13 | 180 | 73.55 | 180 | 72 |
| MgCO₃ | 4.7 | 2 | 9.6 | 4.01 | 14.7 | 6.01 | 20 | 8 |
| Totals | 234.7 | 100 | 239.6 | 100 | 244.7 | 100 | 250 | 100 |

The behavior of the temperature TC of the specimens (4) following the non-combustibility test performed according to the method described above is given in Figure 6, the legend of which indicates the percentages of MgCO₃ introduced in the tested formulations, which correspond to the ones described in Table 9. In this case also, as in the preceding ones exemplified by formulations II, III and IV, it can be seen that the introduction of the flame retardant based on an endothermal mechanism in the formulation delays significantly the rise of the temperature in specimen (4) with respect to the "control" Formulation I, allowing to reach the maximum temperature of the test only after approximately 14, 14 and 16 minutes for the samples with 4, 6 and 8% MgCO₃ respectively, to be compared with the approximately 10 minutes of the control formulation. This demonstrates the effectiveness of the addition of MgCO₃ in the fire-resistant paste for the fire resistance of the innovative formulation proposed herein.

Further results of the non-combustibility tests performed according to the method described above are given in the following Table 10, in which the names of the samples correspond to those of Table 9.

**Table 10 - Results of the non-combustibility tests performed on the samples containing MgCO₃**

| Percentage of added MgCO₃ | DTF (°C) | DTS (°C) | D%W (°C) |
|---|---|---|---|
| 4% | 16 | 22 | 10.8 |
| 6% | 21 | 29 | 12.2 |
| 8% | 24 | 12 | 19 |

As can be seen from Table 10, for all the samples tested all the values of the temperature rises DTF and DTS, as well as of the weight decrease D%W, fall within the corresponding acceptability thresholds prescribed by the IMO MSC 307(88) Part 1 standards. The addition of the flame retardant based on an endothermal mechanism MgCO₃ is therefore effective also with respect to the passing of the above described tests dictated by the IMO MSC 307(88) Part 1 standards.

### FORMULATION VI - Mixture of Mg(OH)₂-MgCO₃

Some formulations of the present invention including water, compounds based on lime, aerogel and mixture of the two flame retardants Mg(OH)₂ and MgCO₃ in different percentages are given in the following Table 11.

**Table 11 - Composition of the samples containing Mg(OH)₂ and MgCO₃.**

| Compound | Percentage of added mixture of Mg(OH)₂-MgCO₃ | | | | | | | |
|---|---|---|---|---|---|---|---|---|
| | 2% | | 4% | | 6% | | 8% | |
| | Weight (g) | % | Weight (g) | % | Weight (g) | % | Weight (g) | % |
| Aerogel | 40 | 17.0 | 40 | 16.7 | 40 | 16.4 | 40 | 16.0 |
| Calcite | 10 | 4.3 | 10 | 4.2 | 10 | 4.1 | 10 | 4.0 |
| Hydrated lime | 180 | 76.7 | 180 | 75.1 | 180 | 73.6 | 180 | 72.1 |
| Mg(OH)₂ | 2.4 | 1.0 | 4.8 | 2.0 | 7.3 | 3.0 | 9.9 | 4.0 |
| MgCO₃ | 2.4 | 1.0 | 4.8 | 2.0 | 7.3 | 3.0 | 9.9 | 4.0 |
| Totals | 234.8 | 100 | 239.6 | 100 | 244.6 | 100 | 249.8 | 100 |

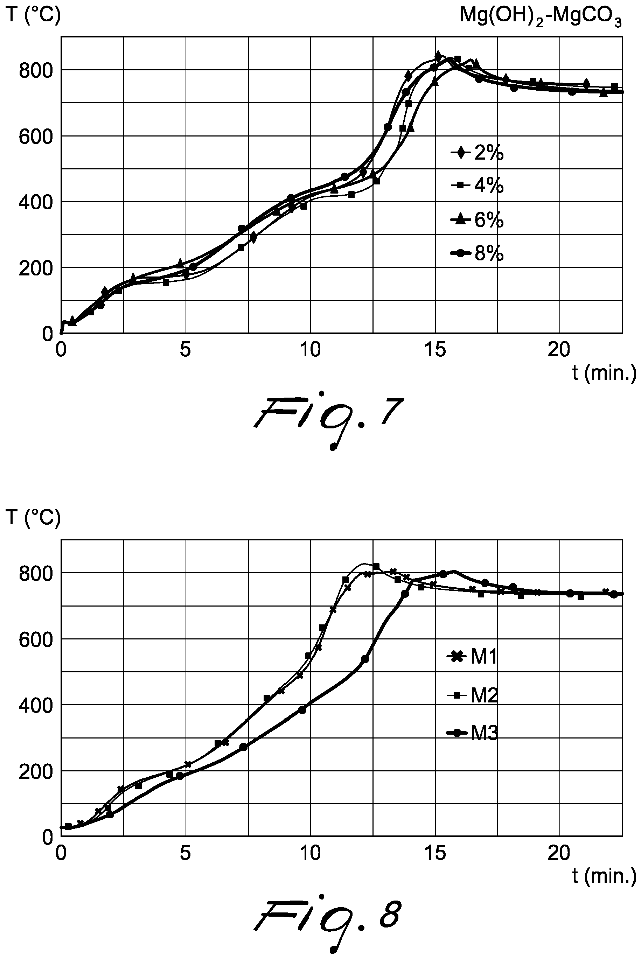

The behavior of the temperature TC of the specimens (4) following the non-combustibility test performed according to the method described above is given in Figure 7, the legend of which indicates the percentages of Mg(OH)₂-MgCO₃ mixture introduced in the tested formulations, which correspond to the ones described in Table 11. In this case also, as in the previous ones exemplified by formulations II-V, it can be seen that the introduction of the flame retardants based on an endothermal mechanism in the formulation significantly delays the rise of the temperature in the specimen (4) with respect to the "control" Formulation I, allowing to reach the maximum temperature of the test only after approximately 15, 16, 16 and 17 minutes for the samples with 2, 4, 6 and 8% Mg(OH)₂-MgCO₃ mixture respectively, to be compared with the approximately 10 minutes of the control formulation. This demonstrates that even when different flame retardants based on an endothermal mechanism are added simultaneously to the fire-resistant paste, they perform their function effectively.

Further results of the non-combustibility tests performed according to the method described previously are given in the following Table 12, in which the names of the samples correspond to the ones of Table 11.

**Table 12 - Results of the non-combustibility tests performed on samples with Mg(OH)₂-MgCO₃**

| Percentage of added Mg(OH)₂-MgCO₃ mixture | DTF (°C) | DTS (°C) | D%W (°C) |
|---|---|---|---|
| 2% | 31 | 23 | 16.7 |
| 4% | 20 | 14 | 16.2 |
| 6% | 3 | 7 | 18.3 |
| 8% | 10 | 20 | 19 |

As can be seen from Table 12, for all the samples containing Mg(OH)₂-MgCO₃ mixture with percentages higher than 2% all the values of the temperature rises DTF and DTS, and of the weight decrease D%W, fall within the corresponding acceptability thresholds prescribed by the IMO MSC 307(88) Part 1 standards. These tests too demonstrate therefore that different flame retardants with endothermal mechanism added simultaneously to the basic fire-resistant paste containing aerogel and lime are able to perform their function effectively also as regards passing the above described tests dictated by the IMO MSC 307(88) Part 1 standards.

### FORMULATION VII - Mixture of Al(OH)₃-Mg(OH)₂-NaHCO₃

Some formulations of the present invention including water, compounds based on lime, aerogel and a mixture of the three flame retardants Al(OH)₃, Mg(OH)₂ and NaHCO₃ in different percentages (termed M1, M2 and M3) are given in the following Table 13.

**Table 13 - Composition of the samples containing Al(OH)₃, Mg(OH)₂ and NaHCO₃.**

| Compound | Percentage of added mixture of Al(OH)₃-Mg(OH)₂-NaHCO₃/Sample name | | | | | |
|---|---|---|---|---|---|---|
| | M1 | | M2 | | M3 | |
| | Weight (g) | % | Weight (g) | % | Weight (g) | % |
| Aerogel | 40 | 16.86 | 40 | 16.35 | 40 | 15.7 |
| Calcite | 10 | 4.22 | 10 | 4.09 | 10 | 3.9 |
| Hydrated lime | 180 | 75.89 | 180 | 73.56 | 180 | 71.2 |
| Al(OH)₃ | 2.4 | 1.01 | 4.9 | 2 | 7.6 | 3.01 |
| Mg(OH)₂ | 2.4 | 1.01 | 4.9 | 2 | 7.6 | 3.01 |
| NaHCO₃ | 2.4 | 1.01 | 4.9 | 2 | 7.6 | 3.01 |
| Totals | 237.2 | 100 | 244.7 | 100 | 252.8 | 100 |

The behavior of the temperature TC of the specimens (4) following the non-combustibility test performed according to the method described above is given in Figure 8, in the legend of which the references M1, M2 and M3 correspond to the ones described in Table 13, i.e., 3%, 6% to 9% mixture of retardants respectively. In this case also, as in the preceding one exemplified by formulation VI, it can be seen that the introduction of the flame retardants based on an endothermal mechanism in the formulation significantly delays the rise of the temperature in the specimen (4) with respect to "control" Formulation I, allowing to reach the maximum temperature of the test only after approximately 12, 13 and 17 minutes for samples M1, M2 and M3, respectively, to be compared with the approximately 10 minutes of the control formulation. This confirms, like the similar results given for Formulation VI, that even when different flame retardant based on an endothermal mechanism are added simultaneously to the fire-resistant paste they perform their function effectively.

Further results of the non-combustibility tests performed according to the method described previously are given in the following Table 14, in which the names of the samples correspond to the ones of Table 13.

**Table 14 - Results of the non-combustibility tests performed on samples with Al(OH)₃-Mg(OH)₂-NaHCO₃ mixture**

| Percentage of added mixture of Al(OH)₃-Mg(OH)₂-NaHCO₃/Sample name | DTF (°C) | DTS (°C) | D%W (°C) |
|---|---|---|---|
| 3% / M1 | 26 | 30 | 21.1 |
| 6% / M2 | 18 | 26 | 17.4 |
| 9% / M3 | 16 | 25 | 17.6 |

As can be seen from Table 14, for all the samples M1, M2 and M3 that contain the Al(OH)₃-Mg(OH)₂-NaHCO₃ mixture the values of the temperature rises DTF and DTS, as well as of the weight decrease D%W, are within the corresponding acceptability thresholds prescribed by the IMO MSC 307(88) Part 1 standards. These tests too demonstrate therefore that various flame retardants based on an endothermal mechanism added simultaneously to the basic fire-resistant paste containing aerogel and lime are able to perform their function effectively also as regards the passing of the above described tests dictated by the IMO MSC 307(88) Part 1 standards.

### FORMULATION VIII - Mixture of various FR and mineral wool

Further formulations that fall within the scope of the present invention provide for the addition to the basic paste of lime and aerogel both of a mixture of flame retardants based on an endothermal mechanism, which includes different quantities of each retardant, and of small quantities of mineral wool, for example rock wool, glass wool, basalt wool or ceramic wool, in order to strengthen further the mechanical strength of the resulting fire-resistant paste. Possible examples of these further formulations, in which the wool used is rock wool, are given in Table 15.

**Table 15 - Composition of samples containing a mixture of flame retardants and mineral wool.**

| Compound | Sample name | | | | | |
|---|---|---|---|---|---|---|
| | A | | B | | C | |
| | Weight (g) | % | Weight (g) | % | Weight (g) | % |
| Aerogel | 20 | 13.79 | 20 | 14.07 | 20 | 14.37 |
| Calcite | 5 | 3.45 | 5 | 3.52 | 5 | 3.59 |
| Hydrated lime | 90 | 62.07 | 90 | 63.34 | 90 | 64.66 |
| Al(OH)₃ | 2.9 | 2.00 | 2.9 | 2.04 | 1.5 | 1.08 |
| Mg(OH)₂ | 2.9 | 2.00 | 1.5 | 1.06 | 1.5 | 1.08 |
| CaCO₃ | 7.3 | 5.03 | 7.2 | 5.07 | 5.7 | 4.09 |
| MgCO₃ | 2.9 | 2.00 | 1.5 | 1.06 | 1.5 | 1.08 |
| Rock wool | 14 | 9.66 | 14 | 9.85 | 14 | 10.06 |
| Totals | 145 | 100 | 142.1 | 100 | 139.2 | 100 |

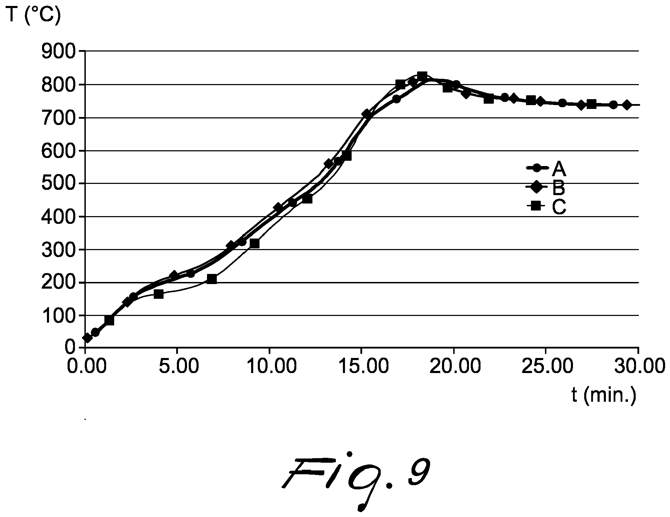

The behavior of the temperature TC of the specimens (4) following the non-combustibility test performed according to the method described above is given in Figure 9, in the legend of which the references A, B and C identify the corresponding samples described in Table 15. In this case also, as in the preceding ones exemplified by formulations VI and VII, it can be seen that the introduction of the flame retardants based on an endothermal mechanism in the formulation significantly delays the rise of the temperature in the specimen (4) with respect to "control" Formulation I, allowing to reach the maximum temperature of the test only after approximately 18, 18.5 and 19.5 minutes for samples A, B and C respectively, to be compared with the approximately 10 minutes of the control formulation, although in all three formulations there is rock wool, which is known to give a measurable contribution to the combustion reactions since it contains approximately 3% organic material in the form of binding agent and process oil, as can be deduced from the composition of the exemplifying rock wool used, which corresponds to the product known as "ROCKWOOL stone wool" produced by ROCKWOOL peninsular S.A.U., with a heat resistance of 1 m² K/W and having a composition which includes, in additional to natural natural stone (mainly basalt rocks) and secondary raw materials, also a binding agent in the form of resin and oils. This confirms, like the similar results provided for Formulations VI and VII, that even when different flame retardants based on an endothermal mechanism are added simultaneously to the fire-resistant paste they perform their function effectively.

Further results of the non-combustibility tests performed according to the method described previously are given in the following Table 16, in which the names of the samples correspond to those of Table 15.

**Table 16 - Results of the non-combustibility tests performed on samples containing Al(OH)₃-Mg(OH)₂-NaHCO₃ mixture**

| Percentage of added mixture of Al(OH)₃-Mg(OH)₂-NaHCO₃/Sample name | DTF (°C) | DTS (°C) | D%W (°C) |
|---|---|---|---|
| A | 10 | 14 | 12.6 |
| B | 18 | 14 | 11.9 |
| C | 16 | 25 | 17.6 |

As can be seen from Table 16, for all samples A, B and C containing the Al(OH)₃-Mg(OH)₂-MgCO₃-CaCO₃ mixture the values of the temperature rises DTF and DTS, and of the weight decrease D%W, fall within the corresponding acceptability thresholds prescribed by the IMO MSC 307(88) Part 1 standards. These tests too demonstrate therefore that different flame retardants based on an endothermal mechanism added simultaneously to the basic fire-resistant paste containing aerogel and lime are able to perform their function effectively also as regards the passing of the above described tests dictated by the IMO MSC 307(88) Part 1 standards, despite the presence in the formulation of rock wool, which contributes to the combustible material. These results are particularly surprising, since all the assessment parameters of the non-combustibility test are far below the maximum values set to pass the test.

### EFFECT OF FLAME RETARDANTS ON PASTE MORPHOLOGY

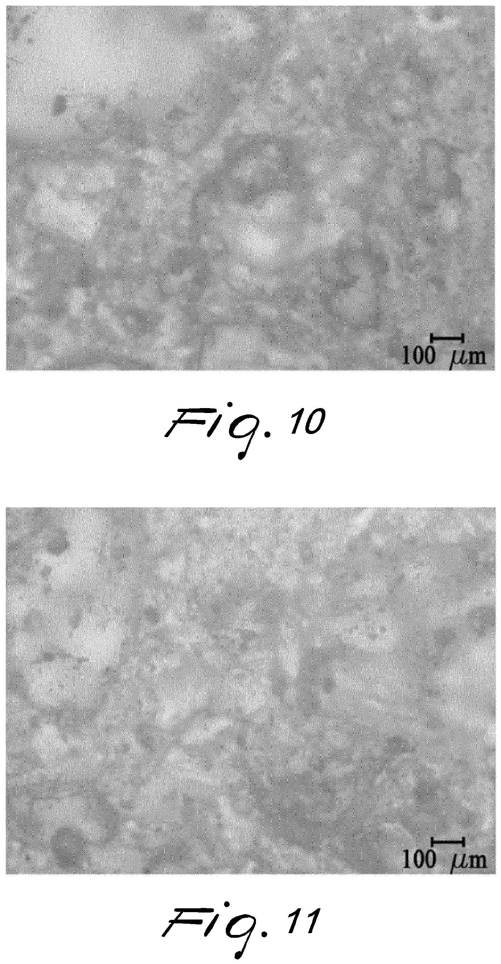

The flame retardants based on an endothermal mechanism which are added to the fire-resistant based on lime and aerogel, in addition to being clearly effective in rendering the pastes based on lime and aerogel to which they are added more resistant to heat, do not detectably decrease their mechanical solidity, and in particular do not cause the forming of cracks or nonuniformities of the material at the macroscopic level. By way of example, Figure 10 shows a photograph taken with a microscope of a sample of fire-resistant paste having the composition described in Table 7, with 2% CaCO₃ as flame retardant, in which it is possible to observe a complete continuity of the material, without evident presence of cracks or voids. Figure 11 shows a photograph taken with a microscope of a sample of fire-resistant paste having the composition described in Table 7, with 8% CaCO₃ as flame retardant. In this photograph, too, it is possible to observe a complete continuity of the material, without evident presence of cracks or voids. The comparison between Figures 10 and 11 does not reveal detectable morphological differences, which entails that the flame retardants based on an endothermal mechanism do not influence the microscopic structural continuity of the paste regardless of the quantity in which they are added to the mixture of lime and aerogel, at least in the concentration intervals considered for the tests reported, thereby giving the paste that is the result of this mixing a good mechanical stability.

### FURTHER FORMULATIONS

A further formulation which falls within the scope of the present invention provides for the addition, to the paste based on lime and aerogel, of a single flame retardant based on an endothermal mechanism for a percentage by weight on the total
weight of the formulation of 15%. In this formulation it is also possible to introduce multiple flame retardants based on an endothermal mechanism, each contributing to the total of 15% by weight of the sum of the flame retardants with respect to the total weight of the formulation.

The person skilled in the art will understand that all the formulations given above are only some among the ones that are possible by combining the various components of the paste described above, and that other possible formulations, although not included in the tables reported previously, fall within the protective scope of the present invention. In particular, quantities of aerogel, lime, calcite, flame retardants based on an endothermal mechanism and mineral wools that are different from the ones given in the table can be used for the fire-resistant insulating material according to the invention, incorporating therein one, two, three or more flame retardants based on an endothermal mechanism. Also, the types of flame retardant used include, but are not exhausted by, the flame retardants mentioned in the reported examples of formulations. In particular, these materials include oxides, hydroxides, citrates, isocitrates, oxalates, formates, aconitates, acetates, borates (with various degrees of oxidation), aluminates (with various degrees of oxidation), carbonates, bicarbonates, silicates (with various degrees of oxidation) of the metals/semimetals Li, Na, K, Rb, Cs, Be, Mg, Ca, Sr, Ba, Sc, Y, La, Ti, Zr, V, Nb, Mo, Mn, Fe, Ru, Co, Ni, Cu, Zn, Si, B, Al, each of these compounds at any level of hydration.

The quantities of flame retardants based on an endothermal mechanism provided, expressed in percentage weight on the total weight of the formulation (wet weight), shall be comprised between 1 and 15%, preferably between 2 and 13%, even more preferably between 3 and 11%. These percentages are expressed as a sum of the percentages by weight of all the flame retardants based on an endothermal mechanism that are added to the insulating compound based on lime and aerogel and flame retardants based on an endothermal mechanism according to the present application or, if one considers a formulation containing a single type of retardant, said percentages are expressed as a percentage of said single retardant in the mixture. With reference to the ratio among the various types of flame retardant based on an endothermal mechanism in the mixture, it is possible to compensate the smaller quantities of one retardant of the mixture with greater quantities of another retardant of the mixture, while remaining within the percentage ranges indicated for the overall mixture of the retardants based on an endothermal mechanism. In defining the above cited minimum and maximum percentages of use of the flame retardants based on an endothermal mechanism in the fire-resistant paste according to the present application, it should be considered that by increasing the quantity of retardants, both used individually and in a mixture, the performance of the resulting fire-resistant paste is improved with respect to the differences in temperature measured during the tests (ΔTS and ΔTF), but their performance in terms of weight loss and retention of mechanical properties (both before and after exposure to fire) are worsened. For this reason, the quantities of retardants to be introduced in the paste are not the result of arbitrariness but of precise assessments of the contrasting requirements of fire resistance, reduced weight loss, preservation of mechanical properties of the final product. A further factor to be considered is the cost of the final product, which decreases as the concentrations of retardants based on an endothermal mechanism in the product itself decreases.

The components of the fire-resistant insulating material containing aerogel in the form of paste according to the invention are essentially of five classes constituted by mineral aerogels, lime and calcite, flame retardants based on an endothermal mechanism, optional mineral fibers present only in some formulations of the present invention, water.

The size of the particles of each one of the components (except for the mineral wools, when present in the formulation) can be various, and is preferable with a diameter of less than 5 mm, more preferably less than 1 mm, and even more preferably less than 0.1 mm. The nanometer size of the particles of each one of the components would be even more preferred, since it allows greater interaction between the surfaces of the particles, thus increasing the compactness of the paste, its mechanical strength and its capacity of thermal insulation and flame resistance.

As regards the mineral wools used in some formulations of the product, the preferred materials are basalt wool, glass wool, rock wool, ceramic wool. However, it is
also possible to use other mineral wools, such as for example potassium octotitanate wool. The mineral fibers currently commercially available can have different dimensional parameters. The diameter of the mineral fibers is generally a few microns, while the length of the fibers is extremely variable, between hundreds of microns and 4-5 cm. Since the invention according to the present application has, among its characteristics, that of sprayability, and since the mineral fibers longer more than 30 mm can be deposited by spraying only with great difficulty, the mineral wool fibers included in some formulations of the present invention preferably have a length comprised between 30 and 0.5 mm, more preferably between 15 and 0.7 mm, even more preferably between 5 and 1 mm. The length of the fibers useful for the paste according to the present invention cannot be less than 0.5 mm, since this length would allow the fiber, in the albeit unlikely case that it is not bonded with the other components of the paste, to enter the human pulmonary alveolar system, creating inflammations. The diameter of the fibers can be various, preferably less than 1 mm, more preferably less than 0.1 mm. The fiber diameter useful for the paste according to the present invention cannot be less than 10 microns, since this length would allow the fiber, in the albeit unlikely case that it is not bonded with the other components of the paste, to enter the human pulmonary alveolar system, creating inflammations. The mineral fibers used in some formulations of the present invention can be functionalized with suitable chemical agents, such as for example silanes or siloxanes, which have the purpose of bonding them in a covalent manner to the other components of the paste. It is possible to add to the fire-resistant compound a single type of mineral fiber or a plurality of types of fiber, each type contributing to a total of 15% by weight on the total weight of the formulation.

In some more advantageous formulations, the fire-resistant paste is deposited by spraying. For this purpose, the viscosity of the paste is adjusted by adding appropriate quantities of water, which depend on variables such as the particle size distribution of the components, the ratio between them, the quality of the water in terms of the presence of metal ions, the operating and application temperature, the availability of different types of spray equipment, capable of applying different pressures to the formulation to be sprayed.

For this reason, the viscosity of the compound (expressed as Brookfield viscosity) may be comprised between 100 and 10,000,000 cPs and more preferably between 1000 and 1,000,000 cPs. It should be noted that the adjustment of the viscosity of the paste by addition of appropriate quantities of water is performed also to adapt its use to mutually different applications, such as application as an insulating material in fire doors (which can be performed by spraying with material with high viscosity, for example Brookfield viscosity between 10,000 and 1,000,000 cPs) or in fire gaps (which can be performed again by spraying but with lower viscosities, for example comprised between 5000 and 500,000 cPs).

The person skilled in the art will understand that the dimensional parameters and/or the morphological and/or functional characteristics described above are only some of the possible dimensional parameters/morphological and/or functional characteristics that characterize the materials that compose the paste, and that other dimensional parameters/morphological and/or functional characteristics, although not described, are within the protective scope of the present invention.

With reference to the method for preparing the fire-resistant insulating material containing aerogel in the form of paste according to the invention, the paste preparation method can be multiple. One method consists in mixing the components of the paste starting from dry powders and then adding water until the desired consistency of the paste is reached. Once the paste of the desired consistency has been obtained, it can be applied as is, or left to "age" for a specific period in order to allow adequate mixing and stabilization of the mixture, optionally with subsequent treatments of continuous or discontinuous mixing. This method is particularly suitable for situations in which a long period of storage of the paste (dry powders can be stored for a long time without undergoing degradations due to molds or bacteria) and a use of the paste in very different environmental conditions, in terms both of temperature and environmental humidity, than those in which the paste would be prepared are provided.

A further method consists in mixing the components of the paste starting from their dry powders, except for the calcium hydroxide, which is added in the form of wet paste (40% dry calcium hydroxide and 60% water, by weight) to the mixture of dry
powders of the other ingredients. This method is adapted to situations in which a long period of storage of the paste is not required and is particularly suitable for manufacturing systems in which the material is mixed by means of horizontal screw conveyor/screw mixers.

A further method consists in mixing the components of the paste starting from their dry powders, except for the calcium hydroxide, which is added in the form of wet paste (40% dry calcium hydroxide and 60% water, by weight) to the mixture of dry powders of the other ingredients, and to which at the end of this process a further quantity of water is added in order to render the mixture more liquid. This method is suitable for situations in which a long period of storage of the paste is not required and is particularly suitable for production systems in which the material is mixed by means of vertical mixers with blades.

The person skilled in the art will understand that the methods described above are only some of the possible mixing methods.

Ultimately, the present invention relates to a thermal or acoustic or thermoacoustic insulation compound in which the compound includes at least one aerogel, calcite, hydrated lime and a component constituted by at least one flame retardant based on an endothermal mechanism and furthermore in which the compound does not include additives with additional organic compounds with respect to the organic compounds that are present in the above cited components, these being the minimum essential characteristics for the implementation of the invention. The expression "component constituted by at least one flame retardant" based on an endothermal mechanism is understood to mean that the component can include one or more flame retardants based on an endothermal mechanism.

Preferably but not necessarily, the compound includes, in percentages by weight on the total wet weight of the compound, aerogel in quantities comprised between 5% and 40% and the component constituted by at least one flame retardant based on an endothermal mechanism in total quantities comprised between 2% and 15%.

Preferably but not necessarily, the aerogel is based on silicon, but it can also be aerogel based on aluminum, chromium, tin, carbon, boron nitride or titanium oxide.

The component constituted by at least one flame retardant based on an endothermal mechanism can include for example at least two different flame retardants which are mutually mixed in said insulating compound or can include for example three or more different flame retardants mutually mixed in said insulating compound.

In general, the component constituted by at least one flame retardant based on an endothermal mechanism can include one or more flame retardants selected from the group consisting of oxides, hydroxides, citrates, isocitrates, oxalates, formates, aconitates, acetates, borates with various degrees of oxidation, aluminates, carbonates, bicarbonates, silicates of the metals/semimetals Li, Na, K, Rb, Cs, Be, Mg, Ca, Sr, Ba, Sc, Y, La, Ti, Zr, V, Nb, Mo, Mn, Fe, Ru, Co, Ni, Cu, Zn, Si, B, Al. In greater detail, the component constituted by at least one flame retardant based on an endothermal mechanism can include one or more flame retardants selected from the group consisting of CaCO₃, MgCO₃, NaHCO₃, Na₂CO₃, Ti(CO₃)₂, CaO, MgO, NaO, Zn₃B₂O₆, Al₂O₃, TiO₂, B(OH)₃, Al(OH)₃, Mg(OH)₂, Ti(OH)₄, MgSiO₃, Al₂SiO₃, Ca₂SiO₄, Na₂SiO₃.

Preferably, the insulating compound according to the invention has such a viscosity that the compound can be applied according to spray deposition methods.

Preferably but not necessarily, the insulating compound includes calcite in quantities comprised between 3 and 5%. Preferably but not necessarily, the insulating compound includes hydrated lime in quantities comprised between 50 and 80%. Preferably, the hydrated lime is hydrated lime with a 40:60 ratio between dry material and water; however, it is also possible to use hydrated lime with a different dry:water ratio, optionally correcting the composition with subsequent additions of greater or smaller quantities of water, also as a function, for example, of the humidity that is present in the other components of the compound or other factors.

In a particular nonlimiting embodiment, the compound may include the components according to quantities in which the at least one aerogel is in quantities comprised between 12 and 20%, the calcite is in quantities comprised between 3 and 5%, the hydrated lime is in quantities comprised between 70 and 78%, the component constituted by at least one flame retardant based on an endothermal mechanism is in total quantities comprised between 2 and 15%.

In some embodiments, the compound may include a further additional component constituted by one or more mineral fibers, for example according to a formulation in which the additional compound constituted by one or more mineral fibers contains one or more types of mineral fibers selected among glass wool, rock wool, basalt wall, ceramic wool. For example, the insulating compound can include the additional component constituted by one or more mineral fibers in quantities comprised between 2 and 20% by weight on the total wet weight of the total insulating compound defined previously.

The insulating compound can be provided in the form of a preparation which is essentially ready for use containing all the components of the compound, optionally providing additional water adapted to be added by mixing to adjust the viscosity of the final compound. As an alternative, the insulating compound can be provided in the form of a set of separate ingredients adapted to be mutually mixed, obtaining the compound, in which the set of ingredients contains all the components of the compound and in which each ingredient contains one or more of the components of the compound, which are mutually separate in the separate ingredients so that the compound is prepared by mixing the separate ingredients, which are suitable to be mutually mixed optionally by providing additional water adapted to be added by mixing to adjust the viscosity of the final compound. For example, the compound can be provided in the form of at least two separate ingredients adapted to be mutually mixed, in which one of the separate ingredients is constituted by the hydrated lime.

The compound thus obtained has characteristics of high non-combustibility, in which the degree of non-combustibility is defined according to the definition of the term "non-combustible" provided previously in the "Definitions" section with reference to the defined tests of samples in a oven with detection of the previously defined parameters DTF, DTS, D%W.

The present invention relates, in addition to the previously defined insulating compound, also to a fire door of the type comprising a space between at least one pair of walls of the door in which the space contains filler material, wherein the filler material is an insulating compound provided according to the present invention according to the composition described previously.

The present invention also relates to a fire gap of the type comprising two walls which are mutually spaced with respect to each other, obtaining the gap, in which the fire gap contains insulating filler material and also in which the filler material is an insulating compound provided according to the present invention according to the previously described composition.

The present invention relates not only to the previously defined insulating compound but also to a boat or ship or floating structure provided with metallic walls insulated by surface application of an insulating material, in which the insulating material is a thermal or acoustic or thermoacoustic insulating compound provided according to the present invention according to the previously described composition.

This application claims the priority of Italian Patent Application No. 102017000109663, filed on September 29, 2017.

## Claims

1. A thermal or acoustic or thermoacoustic insulating compound, **characterized in that** it comprises the following components:
- at least one aerogel;
- calcite;
- hydrated lime;
- a component constituted by at least one flame retardant based on an endothermal mechanism;
the compound being further **characterized in that** the compound does not comprise additives with organic compounds that are additional with respect to the organic compounds that are present in said components.

2. The insulating compound according to claim 1, **characterized in that** it comprises, in percentages by weight on the total wet weight of the insulating compound, aerogel in quantities comprised between 5% and 40%, and said component constituted by at least one flame retardant based on an endothermal mechanism in total quantities comprised between 2% and 15%.

3. The insulating compound according to any one of the preceding claims, **characterized in that** the aerogel is an aerogel based on silicon.

4. The insulating compound according to any one of the preceding claims, **characterized in that** the component constituted by at least one flame retardant based on an endothermal mechanism comprises at least two different flame retardants which are mutually mixed in said insulating compound.

5. The insulating compound according to any one of the preceding claims 1 to 3, **characterized in that** the component constituted by at least one flame retardant based on an endothermal mechanism comprises three or more different flame retardants which are mutually mixed in said insulating compound.

6. The insulating compound according to any one of the preceding claims, **characterized in that** the component constituted by at least one flame retardant based on an endothermal mechanism comprises one or more flame retardants selected from the group consisting of oxides, hydroxides, citrates, isocitrates, oxalates, formates, aconitates, acetates, borates with various degrees of oxidation, aluminates, carbonates, bicarbonates, silicates of Li, Na, K, Rb, Cs, Be, Mg, Ca, Sr, Ba, Sc, Y, La, Ti, Zr, V, Nb, Mo, Mn, Fe, Ru, Co, Ni, Cu, Zn, Si, B, Al.

7. The insulating compound according to the preceding claim, **characterized in that** the component constituted by at least one flame retardant based on an endothermal mechanism comprises one or more flame retardants selected from the group consisting of CaCO₃, MgCO₃, NaHCO₃, Na₂CO₃, Ti(CO₃)₂, CaO, MgO, NaO, Zn₃B₂O₆, Al₂O₃, TiO₂, B(OH)₃, Al(OH)₃, Mg(OH)₂, Ti(OH)₄, MgSiO₃, Al₂SiO₃, Ca₂SiO₄, Na₂SiO₃.

8. The insulating compound according to any one of the preceding claims, **characterized in that** it has a Brookfield viscosity comprised between 100 and 10,000,000 cPs.

9. The insulating compound according to the preceding claim, **characterized in that** it has a Brookfield viscosity comprised between 1000 and 1,000,000 cPs

10. The insulating compound according to any one of the preceding claims, **characterized in that** it comprises, in percentages by weight on the total wet weight of the insulating compound, said calcite in quantities comprised between 3 and 5%.

11. The insulating compound according to any one of the preceding claims, **characterized in that** it comprises, in percentages by weight on the total wet weight of the insulating compound, said hydrated lime in quantities comprised between 50 and 80%.

12. The insulating compound according to the preceding claim, **characterized in that** the hydrated lime is hydrated lime with a 40:60 ratio between dry material and water.

13. The insulating compound according to any one of the preceding claims, **characterized in that** it comprises said components according to the following quantities, in percentages by weight on the total wet weight of the insulating compound:
- said at least one aerogel in quantities comprised between 12 and 20%;
- said calcite in quantities comprised between 3 and 5%;
- said hydrated lime in quantities comprised between 70 and 78%;
- said component constituted by at least one flame retardant based on an endothermal mechanism in total quantities comprised between 2 and 15%.

14. The insulating compound according to any one of the preceding claims, **characterized in that** it comprises a further additional component constituted by one or more mineral fibers.

15. The insulating compound according to the preceding claim, **characterized in that** said additional component constituted by one or more mineral fibers contains one or more types of mineral fibers selected among glass wool, rock wool, basalt wall, ceramic wool.

16. The insulating compound according to the preceding claim, **characterized in that** it comprises said additional component constituted by one or more mineral fibers in quantities comprised between 2 and 20% by weight on the total wet weight of the total insulating compound.

17. The insulating compound according to any one of the preceding claims, **characterized in that** it is provided in the form of a preparation that is essentially ready for use and contains all of the components of said insulating compound, optionally providing additional water suitable to be added by mixing to adjust the viscosity of the final insulating compound.

18. The insulating compound according to any one of the preceding claims 1 to 17, **characterized in** it is provided in the form of a set of separate ingredients adapted to be mutually mixed, obtaining said insulating compound, wherein the set of said ingredients contains all the components of said compound and wherein each ingredient contains one or more of said components of said insulating compound, which are mutually separate in said separate ingredients so that said compound is prepared by mixing said separate ingredients which are adapted to be mutually mixed, optionally providing additional water adapted to be added by mixing to adjust the viscosity of the final compound.

19. The insulating compound according to the preceding claim, **characterized in that** it is provided in the form of a set of at least two separate ingredients adapted to be mutually mixed, in which one of said at least two separate ingredients is constituted by said hydrated lime.

20. A fire door of the type comprising a space between at least one pair of walls of the fire door wherein the space contains filler material, **characterized in that** said filler material is an insulating compound provided according to any one of claims 1 to 19.

21. A fire gap of the type comprising two walls which are mutually spaced, obtaining said gap, wherein said gap contains filler material, **characterized in that** said filler material is an insulating compound provided according to any one of claims 1 to 19.

22. A boat or ship or floating structure provided with metallic walls insulated by surface application of an insulating material, **characterized in that** said insulating material is an insulating compound provided according to any one of claims 1 to 19.

## Patentansprüche

1. Eine thermische, akustische oder thermoakustische Isolierverbindung, **dadurch gekennzeichnet, dass** sie folgende Komponenten umfasst:
- mindestens ein Aerogel,
- Calcit,
- hydrierten Kalk,
- eine Komponente, die aus mindestens einem Flammverzögerungsmittel besteht, basierend auf einem endothermen Mechanismus;
wobei die Verbindung weiter **dadurch gekennzeichnet ist, dass** sie keine Zusatzstoffe mit organischen Verbindungen umfasst, die zusätzlich zu den organischen Verbindungen sind, die in den Komponenten vorliegen.

2. Die Isolierverbindung gemäß Anspruch 1, **dadurch gekennzeichnet, dass** sie, in Gewichtsprozent basierend auf der gesamten Feuchtgutmasse der Isolierverbindung, Folgendes umfasst: Aerogel in Mengen zwischen 5% und 40% und die Komponente, die aus mindestens einem Flammverzögerungsmittel besteht, basierend auf einem endothermen Mechanismus, in Gesamtmengen zwischen 2% und 15%.

3. Die Isolierverbindung gemäß einem beliebigen der obigen Ansprüche, **dadurch gekennzeichnet, dass** das Aerogel auf Silizium basiert.

4. Die Isolierverbindung gemäß einem beliebigen der obigen Ansprüche, **dadurch gekennzeichnet, dass** die Komponente, die aus mindestens einem Flammverzögerungsmittel besteht, basierend auf einem endothermen Mechanismus, mindestens zwei verschiedene Flammverzögerungsmittel umfasst, die in der Isolierverbindung miteinander vermischt sind.

5. Die Isolierverbindung gemäß einem beliebigen der obigen Ansprüche 1 bis 3, **dadurch gekennzeichnet, dass** die Komponente, die aus mindestens einem Flammverzögerungsmittel besteht, basierend auf einem endothermen Mechanismus, drei oder mehr verschiedene Flammverzögerungsmittel umfasst, die in der Isolierverbindung miteinander vermischt sind.

6. Die Isolierverbindung gemäß einem beliebigen der obigen Ansprüche, **dadurch gekennzeichnet, dass** die Komponente, die aus mindestens einem Flammverzögerungsmittel besteht, basierend auf einem endothermen Mechanismus, ein oder mehrere Flammverzögerungsmittel umfasst, gewählt aus der Gruppe bestehend aus Oxiden, Hydroxiden, Citraten, Isocitraten, Oxalaten, Formiaten, Azoinitiatoren, Acetaten, Boraten mit verschiedenen Oxidierungsgraden, Aluminaten, Carbonaten, Bicarbonaten, Silikaten von Li, Na, K, Rb, Cs, Be, Mg, Ca, Sr, Ba, Sc, Y, La, Ti, Zr, V, Nb, Mo, Mn, Fe, Ru, Co, Ni, Cu, Zn, Si, B, Al.

7. Die Isolierverbindung gemäß dem obigen Anspruch, **dadurch gekennzeichnet, dass** die Komponente, die aus mindestens einem Flammverzögerungsmittel besteht, basierend auf einem endothermen Mechanismus, ein oder mehrere Flammverzögerungsmittel umfasst, gewählt aus der Gruppe bestehend aus CaCO₃, MgCO₃, NaHCO₃, Na₂CO₃, Ti(CO₃)₂, CaO, MgO, NaO, Zn₃B₂O₆, Al₂O₃, TiO₂, B(OH)₃, Al(OH)₃, Mg(OH)₂, Ti(OH)₄, MgSiO₃, Al₂SiO₃, Ca₂SiO₄, Na₂SiO₃.

8. Die Isolierverbindung gemäß einem beliebigen der obigen Ansprüche, **dadurch gekennzeichnet, dass** sie eine Brookfield-Viskosität zwischen 100 und 10.000.000 cPs aufweist.

9. Die Isolierverbindung gemäß dem obigen Anspruch, **dadurch gekennzeichnet, dass** sie eine Brookfield-Viskosität zwischen 1000 und 1.000.000 cPs aufweist.

10. Die Isolierverbindung gemäß einem beliebigen der obigen Ansprüche, **dadurch gekennzeichnet, dass** sie, in Gewichtsprozent basierend auf der gesamten Feuchtgutmasse der Isolierverbindung, das Calcit in Mengen zwischen 3 und 5% umfasst.

11. Die Isolierverbindung gemäß einem beliebigen der obigen Ansprüche, **dadurch gekennzeichnet, dass** sie, in Gewichtsprozent basierend auf der gesamten Feuchtgutmasse der Isolierverbindung, den hydrierten Kalk in Mengen zwischen 50 und 80% umfasst.

12. Die Isolierverbindung gemäß dem obigen Anspruch, **dadurch gekennzeichnet, dass** der hydrierte Kalk hydrierter Kalk mit einem Verhältnis zwischen Trockenmaterial und Wasser von 40:60 ist.

13. Die Isolierverbindung gemäß einem beliebigen der obigen Ansprüche, dadurch sie die Komponenten in den folgenden Mengen, in Gewichtsprozent basierend auf der gesamten Feuchtgutmasse der Isolierverbindung, umfasst:
- das mindestens eine Aerogel in Mengen zwischen 12 und 20%;
- das Calcit in Mengen zwischen 3 und 5%;
- den hydrierten Kalk in Mengen zwischen 70 und 78%;
- die Komponente, die aus mindestens einem Flammverzögerungsmittel besteht, basierend auf einem endothermen Mechanismus, in Gesamtmengen zwischen 2 und 15%.

14. Die Isolierverbindung gemäß einem beliebigen der obigen Ansprüche, **dadurch gekennzeichnet, dass** sie eine weitere zusätzliche Komponente umfasst, die aus einer oder mehreren Mineralfasern besteht.

15. Die Isolierverbindung gemäß dem obigen Anspruch, **dadurch gekennzeichnet, dass** die zusätzliche Komponente, die aus einer oder mehreren Mineralfasern besteht, eine oder mehrere Arten von Mineralfasern enthält, gewählt aus Glaswolle, Steinwolle, Basaltwolle, Keramikwolle.

16. Die Isolierverbindung gemäß dem obigen Anspruch, **dadurch gekennzeichnet, dass** sie die zusätzliche Komponente, die aus einer oder mehreren Mineralfasern besteht, in Mengen zwischen 2 und 20 Gewichtsprozent, basierend auf der gesamten Feuchtgutmasse der Gesamt-Isolierverbindung, umfasst.

17. Die Isolierverbindung gemäß einem beliebigen der obigen Ansprüche, **dadurch gekennzeichnet, dass** sie in Form einer Zubereitung bereitgestellt wird, die im Wesentlichen gebrauchsfertig ist und alle Komponenten der Isolierverbindung enthält, wobei wahlweise zusätzliches Wasser bereitgestellt wird, das geeignet ist, durch Mischen zum Anpassen der Viskosität der endgültigen Isolierverbindung hinzugefügt zu werden.

18. Die Isolierverbindung gemäß einem beliebigen der obigen Ansprüche 1 bis 17, **dadurch gekennzeichnet, dass** sie in Form eines Satzes separater Bestandteile bereitgestellt wird, die geeignet sind, miteinander gemischt zu werden, wodurch die Isolierverbindung gewonnen wird, wobei der Satz der Bestandteile alle Komponenten der Verbindung enthält und wobei jeder Bestandteil eine oder mehrere der Komponenten der Isolierverbindung enthält, die in den separaten Bestandteilen getrennt voneinander vorliegen, so dass die Verbindung hergestellt wird durch Mischen der separaten Bestandteile, die bestimmt sind, miteinander gemischt zu werden, wobei wahlweise zusätzliches Wasser bereitgestellt wird, das dazu dient, durch Mischen hinzugefügt zu werden, um die Viskosität der endgültigen Verbindung anzupassen.

19. Die Isolierverbindung gemäß dem obigen Anspruch, **dadurch gekennzeichnet, dass** sie in Form eines Satzes aus mindestens zwei getrennten Bestandteilen bereitgestellt wird, die dazu bestimmt sind, miteinander gemischt zu werden, wobei eines der mindestens zwei separaten Bestandteile aus dem hydrierten Kalk besteht.

20. Eine Brandschutztür von der Art, die einen Raum zwischen mindestens einem Paar von Wänden der Brandschutztür umfasst, wobei der Raum Füllmaterial enthält; **dadurch gekennzeichnet, dass** das Füllmaterial eine Isolierverbindung ist, die gemäß einem beliebigen der Ansprüche 1 bis 19 hergestellt wird.

21. Ein Brandschutzspalt von der Art, die zwei Wände umfasst, welche voneinander beabstandet sind und so den Spalt bilden, wobei der Spalt Füllmaterial enthält; **dadurch gekennzeichnet, dass** das Füllmaterial eine gemäß einem beliebigen der Ansprüche 1 bis 19 hergestellte Isolierverbindung ist.

22. Ein Boot oder Schiff oder eine schwimmende Struktur, versehen mit Metallwänden, die durch Auftragen eines Isoliermaterials auf die Oberfläche isoliert sind; **dadurch gekennzeichnet, dass** das Isoliermaterial eine gemäß einem beliebigen der Ansprüche 1 bis 19 hergestellte Isolierverbindung ist.

## Revendications

1. Composé isolant thermique ou acoustique ou thermo-acoustique, **caractérisé en ce qu'**il comprend les composants suivants:
- au moins un aérogel;
- de la calcite;
- de la chaux hydratée;
- un composant constitué par au moins un retardateur de flamme basé sur un mécanisme endothermique;
le composé étant en outre **caractérisé en ce que** le composé ne comprend pas d'additifs avec des composés organiques qui sont supplémentaires par rapport aux composés organiques qui sont présents dans lesdits composants.

2. Composé isolant selon la revendication 1, **caractérisé en ce qu'**il comprend, en pourcentages en poids sur le poids humide total du composé isolant, un aérogel en des quantités comprises entre 5% et 40%, et ledit composant étant constitué par au moins un retardateur de flamme basé sur un mécanisme endothermique en des quantités totales comprises entre 2% et 15%.

3. Composé isolant selon l'une quelconque des revendications précédentes, **caractérisé en ce que** l'aérogel est un aérogel à base de silicium.

4. Composé isolant selon l'une quelconque des revendications précédentes, **caractérisé en ce que** le composant constitué par au moins un retardateur de flamme basé sur un mécanisme endothermique comprend au moins deux retardateurs de flamme différents qui sont mutuellement mélangés dans ledit composé isolant.

5. Composé isolant selon l'une quelconque des revendications 1 à 3, **caractérisé en ce que** le composant constitué par au moins un retardateur de flamme basé sur un mécanisme endothermique comprend au moins trois retardateurs de flamme différents qui sont mutuellement mélangés dans ledit composé isolant.

6. Composé isolant selon l'une quelconque des revendications précédentes, **caractérisé en ce que** le composant constitué par au moins un retardateur de flamme basé sur un mécanisme endothermique comprend au moins un retardateur de flamme choisi dans le groupe constitué par les oxydes, les hydroxydes, les citrates, les isocitrates, les oxalates, les formates, les aconitates, les acétates, les borates avec différents degrés d'oxydation, les aluminates, les carbonates, les bicarbonates, les silicates de Li, Na, K, Rb, Cs, Be, Mg, Ca, Sr, Ba, Sc, Y, La, Ti, Zr, V, Nb, Mo, Mn, Fe, Ru, Co, Ni, Cu, Zn, Si, B, Al.

7. Composé isolant selon l'une quelconque des revendications précédentes, **caractérisé en ce que** le composant constitué par au moins un retardateur de flamme basé sur un mécanisme endothermique comprend au moins un retardateur de flamme choisi dans le groupe constitué par CaCO₃, MgCO₃, NaHCO₃, Na₂CO₃, Ti(CO₃)₂, CaO, MgO, NaO, Zn₃B₂O₆, Al₂O₃, TiO₂, B(OH)₃, Al(OH)₃, Mg(OH)₂, Ti(OH)₄, MgSiO₃, Al₂SiO₃, Ca₂SiO₄, Na₂SiO₃.

8. Composé isolant selon l'une quelconque des revendications précédentes, **caractérisé en ce qu'**il possède une viscosité de Brookfield comprise entre 100 et 10 000 000 cPs.

9. Composé isolant selon l'une quelconque des revendications précédentes, **caractérisé en ce qu'**il possède une viscosité de Brookfield comprise entre 1 000 et 1 000 000 cPs.

10. Composé isolant selon l'une quelconque des revendications précédentes, **caractérisé en ce qu'**il comprend, en pourcentages en poids sur le poids humide total du composé isolant, ladite calcite en des quantités comprises entre 3 et 5%

11. Composé isolant selon l'une quelconque des revendications précédentes, **caractérisé en ce qu'**il comprend, en pourcentages en poids sur le poids humide total du composé isolant, ladite chaux hydratée en des quantités comprises entre 50 et 80%.

12. Composé isolant selon l'une quelconque des revendications précédentes, **caractérisé en ce que** la chaux hydratée est une chaux hydratée avec un rapport de 40:60 entre le matériau sec et l'eau.

13. Composé isolant selon l'une quelconque des revendications précédentes, **caractérisé en ce qu'**il comprend lesdits composants selon les quantités suivantes, en pourcentages en poids sur le poids humide total du composé isolant:
- ledit au moins un aérogel en des quantités comprises entre 12 et 20 %;
- ladite calcite en des quantités comprises entre 3 et 5%;
- ladite chaux hydratée en des quantités comprises entre 70 et 78%;
- ledit composant constitué par au moins un retardateur de flamme basé sur un mécaniquement endothermique en des quantités totales comprises entre 2 et 15%.

14. Composé isolant selon l'une quelconque des revendications précédentes, **caractérisé en ce qu'**il comprend un autre composant supplémentaire constitué par au moins une fibre minérale.

15. Composé isolant selon l'une quelconque des revendications précédentes, **caractérisé en ce que** ledit composant supplémentaire constitué par au moins une fibre minérale contient au moins un type de fibre minérale choisie parmi la laine de verre, la laine de roche, la laine de basalte, la laine de céramique.

16. Composé isolant selon l'une quelconque des revendications précédentes, **caractérisé en ce qu'**il comprend ledit composant supplémentaire constitué par au moins une fibre minérale en des quantités comprises entre 2 et 20% en poids sur le poids humide total du composé isolant total.

17. Composé isolant selon l'une quelconque des revendications précédentes, **caractérisé en ce qu'**il est fourni sous la forme d'une préparation qui est essentiellement prête à être utilisée et contient tous les composants dudit composé isolant, éventuellement fournissant une eau supplémentaire apte à être ajoutée par mélange pour ajuster la viscosité du composé isolant final.

18. Composé isolant selon l'une quelconque des revendications 1 à 17, **caractérisé en ce qu'**il est fourni sous la forme d'un ensemble d'ingrédients séparés adaptés pour être mutuellement mélangés, permettant d'obtenir ledit composé isolant, dans lequel l'ensemble desdits ingrédients contient tous les composants dudit composé et dans lequel chaque ingrédient contient au moins un desdits composants dudit composé isolant, qui sont mutuellement séparés dans lesdits ingrédients séparés de telle sorte que ledit composé est préparé par mélange desdits ingrédients séparés qui sont conçus pour être mutuellement mélangés, fournissant éventuellement une eau supplémentaire apte à être ajoutée par mélange pour ajuster la viscosité du composé final.

19. Composé isolant selon l'une quelconque des revendications précédentes, **caractérisé en ce qu'**il est fourni sous la forme d'un ensemble d'au moins deux ingrédients séparés conçus pour être mutuellement mélangés, dans lequel un desdits au moins deux ingrédients séparés est constitué par ladite chaux hydratée.

20. Porte coupe-feu du type comprenant un espace entre au moins une paire de parois de la porte coupe-feu, dans laquelle l'espace contient un matériau de charge, **caractérisée en ce que** ledit matériau de charge est un composé isolant fourni selon l'une quelconque des revendications 1 à 19.

21. Interstice coupe-feu du type comprenant deux parois qui sont mutuellement espacées, obtenant ledit interstice, dans lequel ledit interstice contient un matériau de charge, **caractérisé en ce que** ledit matériau de charge est un composé isolant fourni selon l'une quelconque des revendications 1 à 19.

22. Bateau ou navire ou structure flottante pourvu de parois métalliques isolées par application en surface d'un matériau isolant, **caractérisé en ce que** ledit matériau isolant est un matériau isolant fourni selon l'une quelconque des revendications 1 à 19.
